# EUROPEAN PATENT APPLICATION

(11) **EP 4 765 951 A1**
(43) Date of publication of application: **24.06.2026**
(21) Application number: 23949064.2
(22) Date of filing: 28.11.2023
(51) Int. Cl.: H04W 36/08, H04W 36/24

(54) **PROCESSING METHOD, COMMUNICATION DEVICE, AND STORAGE MEDIUM**

(30) Priority: 17.08.2023 WO PCT/CN2023/113567
(71) Applicant: Shenzhen Transsion Holdings Co., Ltd., Shenzhen, Guangdong 518057 (CN)
(72) Inventor: HUANG, Chiun-wei, Shenzhen, Guangdong 518057 (CN); XIE, Yili, Shenzhen, Guangdong 518057 (CN); HUANG, Wei, Shenzhen, Guangdong 518057 (CN)
(74) Representative: Elzaburu S.L.P.
(86) International application number: PCT/CN2023/134814
(87) International publication number: WO 2025/035647

(57) **Abstract**

The technical solution of the present application provides a conditional handover and/or conditional LTM switch method that supports RACH-less by performing a RACH-less conditional handover and/or conditional LTM switch in response to satisfying a first condition, to avoid prolonged service interruption caused by a terminal device executing random access.

## Description

### PRIORITY CLAIM

This application is based on a prior international patent application, and claims priority to International Patent Application No. PCT/CN2023/113567, filed on August 17, 2023, and entitled "PROCESSING METHOD, COMMUNICATION DEVICE, AND STORAGE MEDIUM". The aforementioned patent application is hereby incorporated by reference in its entirety.

### TECHNICAL FIELD

The present application relates to the field of communication technologies, and in particular, to a processing method, a communication device and a storage medium.

### BACKGROUND

Conditional Handover (CHO, Conditional HandOver) is a switch manner in which a candidate cell, after satisfying an execution condition, detaches from a source cell and then establishes a connection with a target cell.

During the conception and implementation of the present application, the inventor has identified at least the following issues: existing conditional handover and conditional LTM (L1/L2 Triggered Mobility, L1/L2 Triggered Mobility) switch procedure do not support RACH-Less. Consequently, when performing conditional handover, a terminal device needs to execute random access, which may lead to prolonged service interruption delay.

The foregoing description provides general background information and does not necessarily constitute the prior art.

### TECHNICAL SOLUTION

A primary objective of the present application is to provide a processing method, a communication device, and a storage medium, aiming to offer a conditional handover and/or conditional LTM switch method that supports RACH-Less, so as to avoid prolonged service interruption.

In order to achieve the above purpose, a processing method provided by the present application may be applied to terminal device (such as a mobile phone), and includes the following steps:
S2: performing a RACH-Less conditional handover and/or conditional LTM switch in response to satisfying a first condition.

Optionally, the performing the RACH-Less conditional handover and/or conditional LTM switch includes:
performing the RACH-Less conditional handover and/or conditional LTM switch based on feedback information corresponding to a random access preamble and/or a reference signal provided by a serving cell; and/or,
performing the RACH-Less conditional handover and/or conditional LTM switch based on a measured TA value.

Optionally, the satisfying the first condition includes at least one of the following:
determining that at least one candidate cell satisfies a conditional handover execution condition;
determining that at least one candidate cell satisfies a conditional LTM switch execution condition;
receiving downlink control information;
receiving radio resource control reconfiguration signaling;
a conditional handover configuration carries indication information that a TA value of a candidate cell is zero and/or indication information that the TA value of the candidate cell is the same as a TA value of the serving cell;
a conditional LTM switch configuration carries indication information that a TA value of an LTM candidate cell is zero and/or indication information that the TA value of the LTM candidate cell is the same as the TA value of the serving cell.

Optionally, the method further includes at least one of the following:
the feedback information is carried in a random access response and/or an LTM switch command;
the feedback information includes the TA value of the candidate cell and/or the TA value of the LTM candidate cell;
the downlink control information includes at least one of index information, a random access configuration, and a reference signal configuration;
the radio resource control reconfiguration signaling includes at least one of the TA value of the serving cell, the conditional handover configuration for at least one candidate cell, the conditional LTM switch configuration, a terminal device measured TA value identifier, and a compensation value.

Optionally, the terminal device measured TA value identifier is used to trigger the terminal device to measure and/or calculate a measured TA value of a corresponding candidate cell.

Optionally, the measured TA value is measured and/or calculated by the terminal device using the TA value of the serving cell and/or the compensation value.

Optionally, the conditional handover configuration includes at least one of a conditional handover configuration index, an execution condition, a configuration parameter of a candidate cell, and a TA value of the candidate cell.

Optionally, the conditional LTM switch configuration includes at least one of a conditional LTM switch configuration index, an LTM execution condition, a configuration parameter of an LTM candidate cell, and a TA value of the LTM candidate cell.

Optionally, the random access response carries at least one of a TA value, uplink scheduling, configured scheduling information, and a radio network temporary identifier of at least one candidate cell and/or LTM candidate cell.

Optionally, the LTM switch command carries at least one of the TA value, the uplink scheduling, the configured scheduling information, and the radio network temporary identifier of at least one LTM candidate cell.

Optionally, the index information includes the conditional handover configuration index and/or the conditional LTM switch configuration index.

Optionally, the terminal device initiates a terminal device measurement of the TA value for at least one candidate cell in response to satisfying a measurement condition.

Optionally, the method further includes at least one of the following:
system information of a corresponding candidate cell is acquired according to the configuration parameter of the candidate cell and/or the configuration parameter of the LTM candidate cell;
performing RACH-Less based on the TA value of the candidate cell and/or the TA value of the LTM candidate cell;
performing conditional handover evaluation based on the conditional handover configuration;
performing conditional LTM switch evaluation based on the conditional LTM switch configuration;
applying the configuration parameter of the candidate cell and/or the configuration parameter of the LTM candidate cell;
storing the conditional handover configuration and/or the conditional LTM switch configuration;
the measurement condition includes that at least one candidate cell is configured with the terminal device measured TA value identifier, and/or, the terminal device measured TA value identifier configured for at least one candidate cell is the same as a terminal device measured TA value identifier configured for a current serving cell;
the measured TA value is measured and/or calculated by the terminal device using the TA value of the serving cell and/or the compensation value.

The present application also provides a processing method, which may be applied to a network device (such as a base station), including the following steps:
S1: transmitting first content to enable a terminal device to perform a RACH-Less conditional handover and/or conditional LTM switch based on the first content.

Optionally, the first content includes at least one of the following:
downlink control information;
a conditional handover configuration for at least one candidate cell;
a conditional LTM switch configuration for at least one candidate cell;
a TA value of a serving cell;
a terminal device measured TA value identifier;
a compensation value.

Optionally, the terminal device measured TA value identifier is used to trigger the terminal device to measure and/or calculate a measured TA value of a corresponding candidate cell.

Optionally, the measured TA value is measured and/or calculated by the terminal device using the TA value of the serving cell and/or the compensation value.

Optionally, the method further includes at least one of the following:
the conditional handover configuration includes indication information that a TA value of a candidate cell is zero;
the conditional handover configuration includes indication information that the TA value of the candidate cell is the same as the TA value of the serving cell;
the conditional LTM switch configuration includes indication information that a TA value of an LTM candidate cell is zero;
the conditional LTM switch configuration includes indication information that the TA value of the LTM candidate cell is the same as the TA value of the serving cell.

Optionally, performing, by the terminal device, the RACH-Less conditional handover and/or conditional LTM switch based on the first content includes:
selecting or determining, by the terminal device, a candidate cell satisfying a second condition based on the first content;
transmitting, by the terminal device, a random access preamble and/or a reference signal to the candidate cell satisfying the second condition; performing, by the terminal device, the RACH-Less conditional handover and/or conditional LTM switch based on feedback information corresponding to the random access preamble and/or the reference signal provided by the serving cell; and/or, measuring and/or calculating, by the terminal device, a measured TA value of the candidate cell satisfying the second condition, and performing the RACH-Less conditional handover and/or conditional LTM switch based on the measured TA value.

Optionally, the method further includes at least one of the following:
the second condition includes a conditional handover execution condition and/or a conditional LTM switch execution condition;
the feedback information is carried in a random access response and/or an LTM switch command;
the feedback information includes the TA value of the candidate cell and/or the TA value of the LTM candidate cell;
the downlink control information includes at least one of index information, random access configuration, and reference signal configuration;
the terminal device measured TA value identifier is used to trigger the terminal device to measure and/or calculate a measured TA value of a corresponding candidate cell;
the measured TA value is measured and/or calculated by the terminal device using the TA value of the serving cell and/or the compensation value.

Optionally, the conditional handover configuration includes at least one of a conditional handover configuration index, an execution condition, a configuration parameter of a candidate cell, and a TA value of the candidate cell.

Optionally, the conditional LTM switch configuration includes at least one of a conditional LTM switch configuration index, an LTM execution condition, a configuration parameter of an LTM candidate cell, and a TA value of the LTM candidate cell.

Optionally, the random access response carries at least one of a TA value, uplink scheduling, configured scheduling information, and a radio network temporary identifier of at least one candidate cell and/or LTM candidate cell.

Optionally, the LTM switch command carries at least one of the TA value, the uplink scheduling, the configured scheduling information, and the radio network temporary identifier of at least one LTM candidate cell.

Optionally, the index information includes a conditional handover configuration index and/or the conditional LTM switch configuration index.

Optionally, the terminal device initiates a terminal device measurement of the TA value for at least one candidate cell in response to satisfying a measurement condition.

Optionally, the method further includes at least one of the following:
acquiring, from the candidate cell, at least one of the TA value, the compensation value, an uplink transmission delay, the uplink scheduling, the configured scheduling information, and the radio network temporary identifier of the candidate cell;
calculating the TA value of the candidate cell based on the uplink transmission delay;
receiving feedback information corresponding to a random access preamble and/or a reference signal sent by the candidate cell;
transmitting the feedback information corresponding to the random access preamble and/or the reference signal to the terminal device.

The present application also provides a communication device, including: a memory, a processor, and a processing program stored in the memory and runs in the processor, where the processing program, when executed by the processor, implements steps of any one of the above processing methods.

The communication device of the present application can either be a terminal device (such as a mobile phone) or a network device (such as a base station). The specific meaning needs to be clarified based on the context.

The present application also provides a storage medium. The storage medium stores a computer program which, when executed by a processor, implement steps of any one of the above processing methods.

The technical solution of the present application provides a conditional handover and/or conditional LTM switch method that supports RACH-less by performing a RACH-less conditional handover and/or conditional LTM switch in response to satisfying a first condition, to avoid prolonged service interruption caused by a terminal device executing random access.

### BRIEF DESCRIPTION OF THE DRAWINGS

The drawings, which are incorporated in and constitute a part of this specification, illustrate embodiments consistent with the present application and together with the specification, serve to explain the principles of the present application. In order to explain the technical solutions of the embodiments of the present application more clearly, the drawings needed to be used in the description of the embodiments will be briefly introduced below. Obviously, for those of ordinary skill in the art, other drawings can be obtained based on these drawings without exerting creative efforts.
FIG. 1 is a schematic diagram of a hardware structure of a mobile terminal implementing various embodiments of the present application.
FIG. 2 is an architecture diagram of a communication network system provided by an embodiment of the present application.
FIG. 3 is a schematic diagram of a hardware structure of a controller 140 provided by the present application.
FIG. 4 is a schematic diagram of a hardware structure of a network node 150 provided by the present application.
FIG. 5 is a schematic flowchart of a processing method according to a first embodiment.
FIG. 6 is a schematic diagram of a conditional handover procedure in the prior art.
FIG. 7 is a schematic interaction flowchart according to a second embodiment in embodiments of the present invention.
FIG. 8 is a schematic interaction flowchart according to a third embodiment in embodiments of the present invention.
FIG. 9 is a schematic interaction flowchart according to a fourth embodiment in embodiments of the present invention.
FIG. 10 is a schematic interaction flowchart according to a fifth embodiment in embodiments of the present invention.
FIG. 11 is a schematic interaction flowchart according to a sixth embodiment in embodiments of the present invention.
FIG. 12 is a schematic interaction flowchart according to a seventh embodiment in embodiments of the present invention.
FIG. 13 is a schematic interaction flowchart according to an eighth embodiment in embodiments of the present invention.
FIG. 14 is a schematic interaction flowchart according to a ninth embodiment in embodiments of the present invention.
FIG. 15 is a schematic interaction flowchart according to an eleventh embodiment in embodiments of the present invention.
FIG. 16 is a schematic flowchart of a processing method according to a twelfth embodiment.
FIG. 17 is a schematic structural diagram 1 of a processing apparatus provided by an embodiment of the present application.
FIG. 18 is a schematic structural diagram 2 of a processing apparatus provided by an embodiment of the present application.
FIG. 19 is a schematic structural diagram of a communication device provided by an embodiment of the present application.

The implementation, functional characteristics and advantages of the purpose of the present application will be further described with reference to the drawings in combination with the embodiments. Through the above drawings, specific embodiments of the present application have been shown, which will be described in more detail later. These drawings and text descriptions are not intended to limit the scope of the concept of the present application in any way, but to describe the concept of the present application to those skilled in the art by referring to specific embodiments.

### IMPLEMENTATIONS OF THE PRESNET APPLICATION

Exemplary embodiments will be described in detail herein, examples of which are illustrated in the drawings. When the following description refers to the drawings, unless otherwise indicated, the same numbers in different drawings refer to the same or similar elements. The implementations described in the following exemplary embodiments do not represent all implementations consistent with the present application. Rather, they are merely examples of apparatus and methods consistent with aspects of the present application as detailed in the appended claims.

It should be noted that, in the present application, terms "including", "containing" or any other variation thereof is intended to cover non-exclusive inclusion, so that a process, method, object or apparatus that includes a series of elements not only includes those elements, but also includes other elements not explicitly listed, or also includes elements inherent to such process, method, object or apparatus. Without further restrictions, an element defined by the statement of "including one ......" does not exclude the existence of other identical elements in the process, method, object or apparatus that includes the element, and/or, the components, features and elements with the same name in different embodiments of the present application may have the same meaning or different meanings, and the specific meaning thereof should be determined according to their description in the specific embodiment or further combined with the context in the specific embodiment.

It should be understood that although the terms first, second, third, etc., may be used herein to describe various information, the information should not be limited to these terms. These terms are only used to distinguish the same type of information from each other. For example, without departing from the scope of the present application, the first information can also be called the second information, and similarly, the second information can also be called the first information. Depending on the context, the word "if" as used here can be interpreted as "when" or "in a case of" or "in response to a determination". Furthermore, as used herein, singular forms "a", "an" and "the" are intended to also include plural forms, unless the context indicates otherwise. It should be further understood that the terms "containing" and "including" indicate the presence of stated features, steps, operations, elements, components, items, categories, and/or groups, but do not exclude the presence, appearance or addition of one or more other features, steps, operations, elements, components, items, categories, and/or groups. Terms "or", "and/or" and "including at least one of the following" used in the present application can be interpreted as inclusive or mean any one or any combination. For example, "including at least one of the following: A, B, C" means "any one of the following: A, B, C; A and B; A and C; B and C; A, B and C"; and for another example, "A, B or C" or "A, B and/or C" means "any one of the following: A, B, C; A and B; A and C; B and C; A, B and C". Exceptions to this definition only occur when the combination of elements, functions, steps or operations are inherently mutually exclusive in some way.

It should be understood that although the steps in the flowchart in the embodiment of the present application are shown in sequence as indicated by the arrow, these steps are not necessarily executed in sequence as indicated by the arrow. Unless explicitly stated herein, the execution of these steps is not strictly limited in order, and it can be executed in other order. Moreover, at least a part of the steps in the drawings may include a plurality of sub-steps or stages. These sub-steps or stages may not necessarily be completed at the same time, but may be executed at different times, and the execution order thereof may not necessarily be sequential, but may be executed in turn or alternately with other steps or at least a part of sub-steps or stages of other steps.

Depending on the context, the word "if" and "in case" as used here can be interpreted as "when" or "in a case of" or "in response to a determination" or "in response to a detection". Similarly, depending on the context, the phrases "if determining..." or "if detecting... (a stated condition or event)" can be interpreted as "when determining..." or "in response to a determination" or "when detecting... (a stated condition or event)" or "in response to a detection (a stated condition or event)".

It should be noted that in the present application, step codes such as S1, S2, etc., are adopted to express the corresponding contents more clearly and simply, and do not constitute a substantial restriction on the sequence. In specific implementations, those skilled in the art may execute S2 first and then S1, etc., which are all within the scope of protection of the present application.

It should be understood that the specific embodiments described here are only used to describe the present application, and are not used to limit the present application.

In the following description, suffixes such as "module", "component" or "unit" used to represent elements are only used to facilitate the description of the present application, and have no specific meaning in themselves. Thus, "module", "component" or "unit" can be used in combination.

The communication device mentioned in the present application can either be a terminal device (such as a mobile phone) or a network device (such as a base station). The specific meaning needs to be clarified based on the context.

The terminal device can be implemented in various forms. For example, the terminal device described in the present application can include an intelligent terminal device such as a mobile phone, a tablet computer, a notebook computer, a palm computer, a personal digital assistant (Personal Digital Assistant, PDA), a portable media player (Portable Media Player, PMP), a navigation device, a wearable device, a smart bracelet, a pedometer, and a fixed terminal device such as a digital TV or a desktop computer.

In the following description, the mobile terminal will be taken as an example for illustration, and those skilled in the art will understand that the configuration according to the implementations of the present application can also be applied to a fixed type of terminal in addition to elements specially used for mobile purposes.

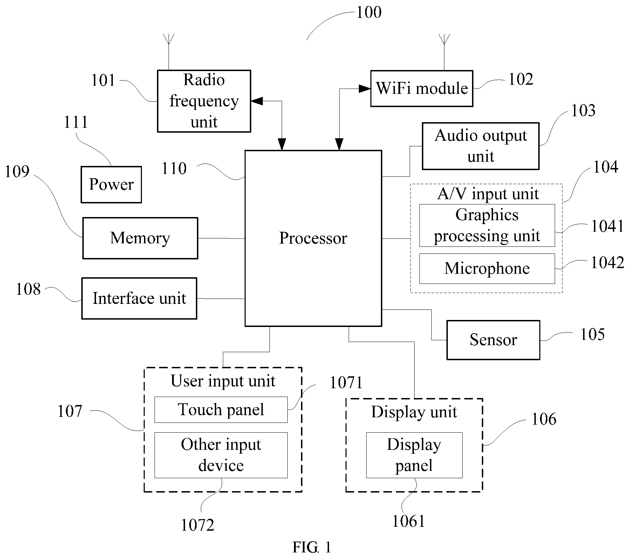

Referring to FIG. 1, FIG. 1 is a schematic diagram of a hardware structure of a mobile terminal implementing various embodiments of the present application. The mobile terminal 100 may include: components such as a RF (Radio Frequency, radio frequency) unit 101, a WiFi module 102, an audio output unit 103, an A/V (audio/video) input unit 104, a sensor 105, a display unit 106, a user input unit 107, an interface unit 108, a memory 109, a processor 110, a power 111, etc. It can be understood by those skilled in the art that the structure of the mobile terminal as shown in FIG. 1 does not constitute a limitation on the mobile terminal, and the mobile terminal may include more or less components than those shown in the drawing, or combine some components, or have different component arrangements.

With reference to FIG. 1, each component of the mobile terminal will be specifically introduced below.

The radio frequency unit 101 can be used for receiving and transmitting signals in a process of transmitting and receiving information or a calling process, and specifically, after receiving downlink information of a base station, the downlink information is processed by the processor 110; in addition, uplink data is sent to the base station. Generally, the radio frequency unit 101 includes, but is not limited to, an antenna, at least one amplifier, a transceiver, a coupler, a low noise amplifier, a duplexer, and the like. And/or, the radio frequency unit 101 can also communicate with the network and other devices through wireless communication. The wireless communication can use any communication standard or protocol, including but not limited to a GSM (Global System for Mobile Communication, global system for mobile communication), GPRS (General Packet Radio Service, general packet radio service), CDMA2000 (Code Division Multiple Access 2000, code division multiple access 2000), WCDMA (Wideband Code Division Multiple Access, wideband code division multiple access), TD-SCDMA (Time Division-Synchronous Code Division Multiple Access, time division-synchronous code division multiple access), FDD-LTE (Frequency Division Duplexing-Long Term Evolution, frequency division multiplexing-long term evolution), TDD-LTE (Time Division Duplex-Long Term Evolution, time division duplex-long term evolution), 5G, 6G, etc.

WiFi is a short-distance wireless transmission technology. The mobile terminal can help users to transmit and receive emails, browse web pages and access streaming media through the WiFi module 102, which provides users with wireless broadband Internet access. Although the WiFi module 102 is shown in FIG. 1, it can be understood that it is not a necessary component of the mobile terminal, and it can be completely omitted as required within the scope without changing the essence of the invention.

When the mobile terminal 100 is in a call signal receiving mode, a conversation mode, a recording mode, a voice recognition mode, a broadcast receiving mode and the like, the audio output unit 103 can convert the audio data received by the radio frequency unit 101 or the WiFi module 102 or stored in the memory 109 into an audio signal and output the audio signal as sound. Furthermore, the audio output unit 103 can also provide audio output related to a specific function performed by the mobile terminal 100 (e.g., sound for receiving a call signal, sound for receiving a message, etc.). The audio output unit 103 may include a loudspeaker, a buzzer, etc.

The A/V input unit 104 is used to receive audio or video signals. The A/V input unit 104 may include a graphics processing unit (Graphics Processing Unit, GPU) 1041 and a microphone 1042. The graphics processing unit 1041 processes image data of still pictures or videos obtained by an image capturing apparatus (such as a camera) in a video capturing mode or an image capturing mode. The processed image frame can be displayed on the display unit 106. The image frames processed by the graphics processing unit 1041 can be stored in the memory 109 (or other storage media) or transmitted via the radio frequency unit 101 or the WiFi module 102. The microphone 1042 can receive sound (audio data) via the microphone 1042 in operation modes such as a telephone conversation mode, a recording mode, a voice recognition mode, etc., and can process such sound into audio data. The processed audio (voice) data can be converted into be in a format which can be transmitted to the mobile communication base station via the radio frequency unit 101 for output in the case of telephone conversation mode. The microphone 1042 can implement various types of noise cancellation (or suppression) algorithms to cancel (or suppress) noise or interference generated in the process of receiving and transmitting audio signals.

The mobile terminal 100 also includes at least one sensor 105, such as a light sensor, a motion sensor, and other sensors. Optionally, the light sensor includes an ambient light sensor and a proximity sensor. Optionally, the ambient light sensor can adjust the brightness of the display panel 1061 according to the brightness of the ambient light, and the proximity sensor can turn off the display panel 1061 and/or the backlight when the mobile terminal 100 moves to ears. As a kind of motion sensor, an accelerometer sensor can detect the accelerations in all directions (generally three-axis), and can detect the magnitude and direction of gravity when static, which can be used in applications for recognizing a posture of the mobile phone (such as screen switching, related games, magnetometer posture calibration), vibration recognition related functions (such as a pedometer, tapping), etc.; as for other sensors, such as a fingerprint sensor, a pressure sensor, an iris sensor, a molecular sensor, a gyroscope, a barometer, a hygrometer, a thermometer, an infrared sensor, etc., which can be configured in mobile phones, description will not be repeated here.

The display unit 106 is used to display information input by the user or provide it to the user. The display unit 106 may include a display panel 1061, where the display panel 1061 can be configured in forms of liquid crystal display (Liquid Crystal Display, LCD), an organic light-emitting diode (Organic Light-Emitting Diode, OLED), etc.

The user input unit 107 may be used to receive input digit or character information, and generate key signal input relating to user setting and function control of the mobile terminal. Optionally, the user input unit 107 may include a touch panel 1071 and other input devices 1072. The touch panel 1071 is also called as a touch screen, which can collect user's touch operations on or near the touch panel 1071 (such as the user's operation on or near the touch panel 1071 by using any suitable object or accessory such as finger, touch pen, etc.), and drive the corresponding connection apparatuses according to a preset program. The touch panel 1071 can include two parts: a touch detection apparatus and a touch controller. Optionally, the touch detection apparatus detects the touch orientation of the user, detects a signal brought by the touch operation, and transmits the signal to the touch controller; and the touch controller receives touch information from the touch detection apparatus, converts touch information into contact coordinates, and transmits the contact coordinates to the processor 110, and can receive and execute commands transmitted by the processor 110. And/or, the touch panel 1071 can be implemented in various types such as resistive, capacitive, infrared and surface acoustic wave. In addition to the touch panel 1071, the user input unit 107 may also include other input devices 1072. Optionally, the other input devices 1072 may include, but are not limited to, one or more of a physical keyboard, function keys (such as volume control keys, a switch key, etc.), a trackball, a mouse, a joystick, etc., which are not specifically limited here.

Optionally, the touch panel 1071 can cover the display panel 1061, and the touch panel 1071, when detecting a touch operation on or near it, transmits the touch operation to the processor 110 to determine a type of a touch event, and then the processor 110 provides corresponding visual output on the display panel 1061 according to the type of the touch event. Although in FIG. 1, the touch panel 1071 and the display panel 1061 are two independent components to realize the input and output functions of the mobile terminal, in some embodiments, the touch panel 1071 and the display panel 1061 can be integrated to implement the input and output functions of the mobile terminal, which is not specifically limited here.

The interface unit 108 serves as an interface through which at least one external apparatus can be connected to the mobile terminal 100. For example, the external apparatus may include a wired or wireless headset port, an external power supply (or battery charger) port, a wired or wireless data port, a memory card port, a port for connecting an apparatus with a recognizing module, an audio input/output (I/O) port, a video I/O port, an earphone port, and the like. The interface unit 108 may be used to receive input (e.g., data information, power, etc.) from an external apparatus and transmit the received input to one or more components within the mobile terminal 100 or may be used to transmit data between the mobile terminal 100 and the external apparatus.

The memory 109 may be used to store a software program and various data. The memory 109 may mainly include a program storage section and a data storage section. Optionally, the program storage section may store an operating system, application programs required by at least one function (such as a sound playing function, an image playing function, etc.), etc., and the data storage area can store data created according to the use of the mobile phone (such as audio data, a phone book, etc.), etc.. And/or, the memory 109 may include a high-speed random access memory and a non-volatile memory, such as at least one disk memory component, a flash memory component, or other volatile solid-state memory components.

The processor 110 is a control center of the mobile terminal, which connects respective parts of the whole mobile terminal with various interfaces and lines, executes various functions of the mobile terminal and processes data by running or executing software programs and/or modules stored in the memory 109 and calling the data stored in the memory 109, so as to wholly monitor the mobile terminal. The processor 110 may include one or more processing units; preferably, the processor 110 can integrate an application processor and a modem processor, and optionally, the application processor mainly processes the operating system, a user interface and application programs, etc., and the modem processor mainly processes wireless communication. It can be understood that the above modem processor may not be integrated into the processor 110.

The mobile terminal 100 may further include a power supply 111 (such as a battery) for supplying power to various components, and preferably, the power supply 111 may be logically connected to the processor 110 through a power management system, so as to realize functions of managing charging, discharging, and power consumption management through the power management system.

Although not shown in FIG. 1, the mobile terminal 100 may also include a Bluetooth module and the like, which will not be repeated here.

In order to facilitate understanding of the embodiments of the present application, the communication network system on which the mobile terminal of the present application is based will be described below.

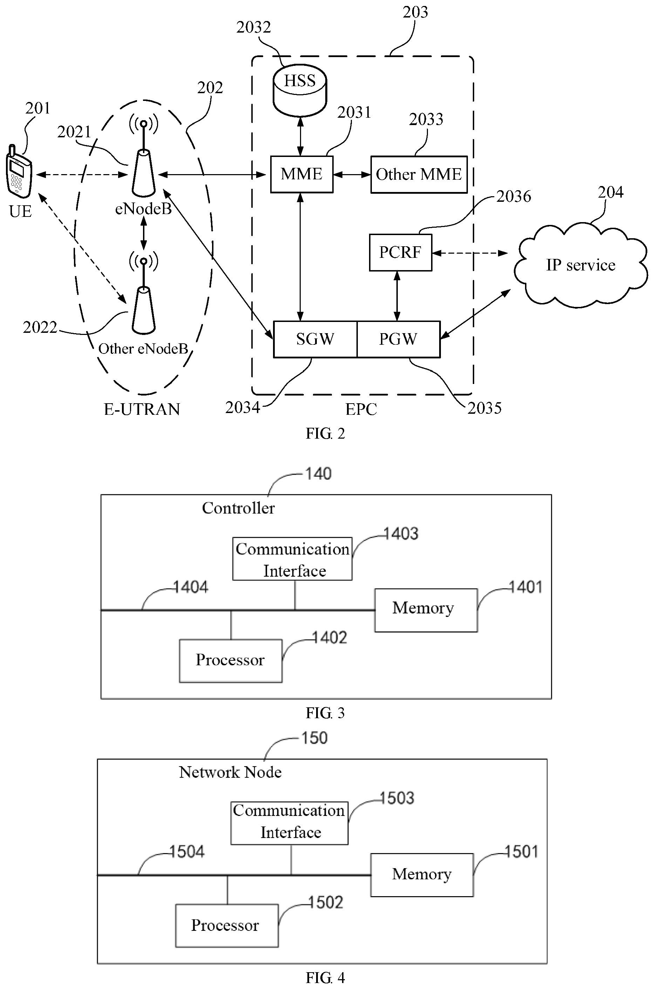

Referring to FIG. 2, FIG. 2 is an architecture diagram of a communication network system provided by an embodiment of the present application. The communication network system is a NR (New Radio, new radio) system with a universal mobile communication technology, and the NR system includes a UE (User Equipment, user equipment) 201, an E-UTRAN (Evolved UMTS Terrestrial Radio Access Network, evolved UMTS terrestrial radio access network) 202, an EPC (Evolved Packet Core, evolved packet core) 203 and IP services 204 of operators.

Optionally, the UE 201 may be the above terminal device 100, which will not be repeated here.

The E-UTRAN 202 includes an eNodeB 2021, other eNodeB 2022, etc. Optionally, the eNodeB 2021 can be connected to the other eNodeB 2022 through a backhaul (backhaul) (such as an X2 interface), and the eNodeB 2021 is connected to the EPC 203, and the eNodeB 2021 may provide an access from the UE 201 to the EPC 203.

The EPC 203 may include an MME (Mobility Management Entity, mobility management entity) 2031, an HSS (Home Subscriber Server, home subscriber server) 2032, other MME 2033, an SGW (Serving Gate Way, serving gate way) 2034, a PGW (PDN Gate Way, packet data network gate way) 2035, a PCRF (Policy and Charging Rules Function, policy and charging rules function) 2036, etc. Optionally, the MME 2031 is a control node that handles signaling between the UE 201 and the EPC 203, and provides bearer and connection management. The HSS 2032 is used to provide some registers to manage functions such as home location registers (not shown in the drawing), and holds some user-specific information about service features, data rates, etc. All user data can be transmitted through the SGW 2034, and the PGW 2035 can provide IP address allocation and other functions of the UE 201. The PCRF 2036 is a strategy decision point of the strategy and charging control of service data flow and IP bearer resources, which selects and provides available strategies and charging control decisions for the strategy and charging execution function unit (not shown in the drawing).

The IP services 204 may include the Internet, intranet, IMS (IP Multimedia Subsystem, IP multimedia subsystem) or other IP services.

Although the LTE system has been described as an example, those skilled in the art should know that the present application is not only applicable to the LTE system, but also applicable to other wireless communication systems, such as GSM, CDMA2000, WCDMA, TD-SCDMA, 5G and future new network systems (such as 6G) etc., which is not limited here.

FIG. 3 is a schematic diagram of a hardware structure of a controller 140 provided by the present application. The controller 140 includes: a memory 1401 and a processor 1402. The memory 1401 is used to store program instructions, and the processor 1402 is used to call the program instructions stored in the memory 1401 to execute the steps executed by the controller in the first method embodiment described above. Their implementation principles and beneficial effects are similar, and will not be repeated here.

Optionally, the controller further includes a communication interface 1403. The communication interface 1403 can be connected to the processor 1402 via a bus 1404. The processor 1402 can control the communication interface 1403 to implement receiving and transmitting functions of the controller 140.

FIG. 4 is a schematic diagram of a hardware structure of a network node 150 provided by the present application. The network node 150 includes: a memory 1501 and a processor 1502. The memory 1501 is used to store program instructions, and the processor 1502 is used to call the program instructions stored in the memory 1501 to execute the steps executed by the first node in the first method embodiment described above. Their implementation principles and beneficial effects are similar, and will not be repeated here.

Optionally, the controller further includes a communication interface 1503. The communication interface 1503 can be connected to the processor 1502 via a bus 1504. The processor 1502 can control the communication interface 1503 to implement receiving and transmitting functions of the network node 150.

The integrated modules implemented in the form of software functional modules mentioned above can be stored in a computer-readable storage medium. The software functional modules may be stored in a storage medium and includes several instructions to cause a computer device (may be a personal computer, a server, or a network device, etc.) or a processor (English: processor) to perform part of the steps of the methods of various embodiments of the present application.

In the above-mentioned embodiments, it can be implemented in whole or in part by software, hardware, firmware or any combination thereof. When implemented in software, it can be fully or partially implemented in the form of a computer program product. The computer program product includes one or more computer instructions. When the computer program instructions are loaded and executed in a computer, all or part of the processes or functions according to the embodiments of the present application are generated. The computer can be a general-purpose computer, a special-purpose computer, a computer network, or other programmable devices. The computer instructions can be stored in a computer-readable storage medium or transmitted from one storage medium to another. For example, the computer instructions can be transmitted from one website, computer, server or data center to another website, computer, server or data center in a wired way (such as a coaxial cable, optical fiber, a digital subscriber line (DSL)) or a wireless way (such as infrared, wireless, microwave, etc.). The storage medium can be any available medium that computers can access, or data storage devices such as servers and data centers that include one or more available mediums. The available medium can be a magnetic medium (e.g., a floppy disk, a storage disk, a magnetic tape), an optical medium (e.g., DVD), or a semiconductor medium (e.g., a solid state disk, solid state disk (SSD)), etc.

Based on the above-mentioned hardware structure of mobile terminal and communication network system, various embodiments of the present application are proposed.

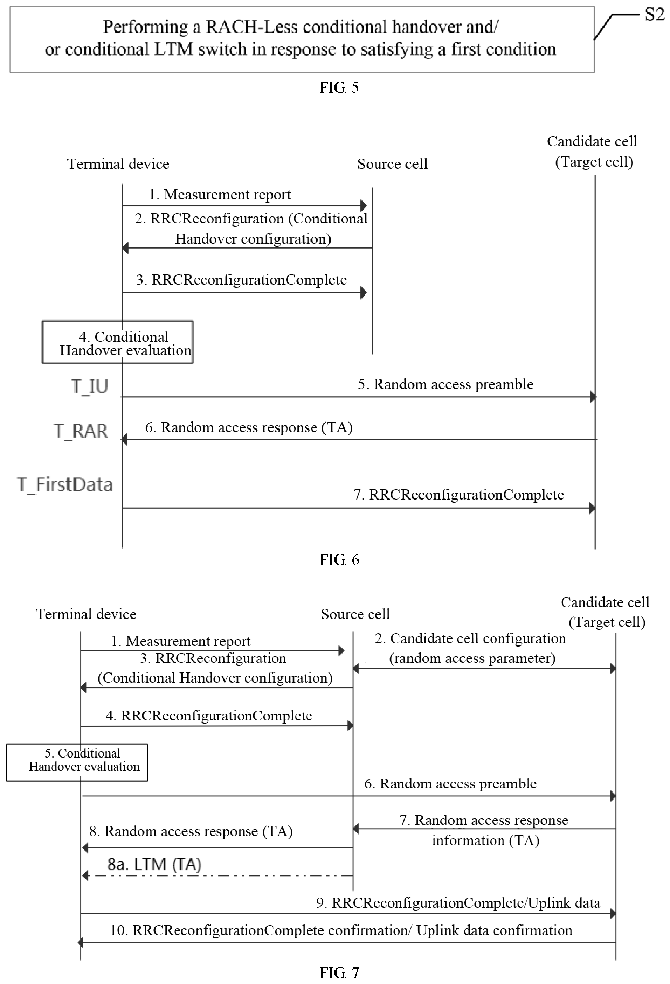

First EmbodimentReferring to FIG. 5, FIG. 5 is a schematic flowchart of a processing method according to the first embodiment. The processing method of the embodiment of the present application can be applied to a terminal device (e.g., a mobile phone), including the steps:
S2: performing a RACH-Less conditional handover and/or conditional LTM switch in response to satisfying a first condition.

Referring to FIG. 6, FIG. 6 is a schematic diagram of a conditional handover procedure in the prior art. As shown in FIG. 6, a traditional conditional handover (CHO, Conditional HandOver) is a switch procedure in which a candidate cell, after satisfying an execution condition, detaches (Detach) from a source cell and then establishes a connection with a target cell. The current conditional handover procedure does not support RACH-less. Therefore, a failure at any step in the handover process (e.g., random access failure) will result in prolonged service interruption delay. For example: when a terminal evaluates execution condition(s) and at least one candidate cell satisfies the execution condition(s), the terminal acquires system information of the candidate cell and confirms an occasion where a random access preamble can be transmitted (RO, RACH Occassion), causing handover delay (T_IU), where IU refers to interruption uncertainty (Interruption Uncertainly), and/or, a time for waiting to receive a random access response (T_RAR) after transmitting the random access preamble, and/or, delay (T_FirstData) from acquiring uplink scheduling based on the random access response to transmitting the first uplink data.

And/or, there is currently no specific procedure for performing RACH-less conditional handover, for example, how to acquire a timing advance (TA, Timing Advance) value of the target cell in advance. And/or, currently, there are still no clear execution condition(s) for the conditional L1/L2 Triggered Mobility (LTM, L1/L2 Triggered Mobility) switch.

In the embodiment of the present application, by introducing a procedure for obtaining the TA value of the target cell in advance for conditional handover and/or conditional LTM switch, a conditional handover and/or conditional LTM switch method supporting RACH-less is provided, which can reduce interruption delay caused by handover.

Optionally, the performing the RACH-Less conditional handover and/or conditional LTM switch in response to satisfying the first condition may be:
transmitting a random access preamble and/or a reference signal to at least one candidate cell in response to satisfying the first condition;
performing the RACH-Less conditional handover and/or conditional LTM switch based on feedback information corresponding to the random access preamble and/or the reference signal provided by a serving cell.

Optionally, the performing the RACH-Less conditional handover and/or conditional LTM switch in response to satisfying the first condition may be:
measuring and/or calculating a measured TA value of a candidate cell in response to satisfying the first condition;
performing the RACH-Less conditional handover and/or conditional LTM switch based on the measured TA value.

Optionally, the satisfying the first condition includes at least one of the following:
determining that at least one candidate cell satisfies a conditional handover execution condition;
determining that at least one candidate cell satisfies a conditional LTM switch execution condition;
receiving downlink control information;
receiving radio resource control reconfiguration signaling;
a conditional handover configuration carries indication information that a TA value of a candidate cell is zero and/or indication information that the TA value of the candidate cell is the same as a TA value of the serving cell;
a conditional LTM switch configuration carries indication information that a TA value of an LTM candidate cell is zero and/or indication information that the TA value of the LTM candidate cell is the same as the TA value of the serving cell.

Optionally, the terminal device may perform conditional handover evaluation based on received pre-configuration information. When at least one candidate cell satisfies the conditional handover execution condition, the terminal device transmits a random access preamble to the candidate cell, receives a random access response and/or an LTM command from the serving cell, applies a configuration parameter of a target cell and performs the RACH-less conditional handover according to a TA value of the target cell.

Optionally, the terminal device may perform conditional LTM switch evaluation based on received pre-configuration information. When at least one candidate cell satisfies the conditional LTM switch execution condition, the terminal device transmits a random access preamble to the candidate cell, receives a random access response and/or an LTM command from the serving cell, applies a configuration parameter of a target cell and performs the RACH-less conditional LTM switch according to a TA value of the target cell.

Optionally, the terminal device may first receive the pre-configuration information, and then trigger random access via a PDCCH (Physical Downlink Control Channel, physical downlink control channel) order to obtain the TA value of the target cell in advance.

Optionally, the terminal device may also first trigger random access via the PDCCH order to obtain the TA value of the target cell in advance, and then perform the RACH-less conditional handover and/or conditional LTM switch to switch to the target cell based on the TA value of the target cell and the pre-configuration information.

Optionally, the pre-configuration information received by the terminal device may include a TA indication information of the target cell. If the TA indication information of the target cell is indication information that the TA value of the candidate cell is zero and/or indication information that the TA value of the candidate cell is the same as the TA value of the serving cell, the terminal device performs the conditional handover evaluation based on the pre-configuration information. When at least one target cell satisfies the execution condition, the terminal device applies the configuration parameter of the target cell and performs the RACH-less conditional handover to switch to the target cell through the TA indication information of the target cell.

Optionally, if the TA indication information of the target cell is indication information that the TA value of the candidate cell is zero and/or indication information that the TA value of the LTM candidate cell is the same as the TA value of the serving cell, the terminal device performs the conditional LTM switch evaluation based on the pre-configuration information. When at least one target cell satisfies the execution condition, the terminal device applies the configuration parameter of the target cell and performs the RACH-less conditional LTM switch to switch to the target cell through the TA indication information of the target cell.

Optionally, the terminal device may perform the conditional handover evaluation based on the received pre-configuration information. When at least one candidate cell satisfies the conditional handover execution condition, the terminal device transmits an uplink reference signal (SRS, Sounding Reference Signal) to the candidate cell, receives the random access response and/or LTM command from the serving cell, applies the configuration parameter of the target cell and performs the RACH-less conditional handover according to the TA value of the target cell.

Optionally, the terminal device may perform conditional LTM switch evaluation based on received pre-configuration information. When at least one candidate cell satisfies the conditional LTM switch execution condition, the terminal device transmits an uplink reference signal to the candidate cell, receives the random access response and/or LTM command from the serving cell, applies the configuration parameter of the target cell and performs the RACH-less conditional LTM switch according to the TA value of the target cell.

Optionally, the terminal device receives pre-configuration information sent by a network device and an uplink reference signal transmission request triggered by a PDCCH order, then transmits an SRS to a corresponding target cell, and receives TA information fed back by the target cell in the source cell. The terminal device performs the conditional handover evaluation based on the TA value of the target cell and the pre-configuration information. When at least one target cell satisfies the execution condition, the terminal device applies a configuration parameter of the target cell, and then performs the RACH-less conditional handover to switch to the target cell using the TA value of the target cell.

Optionally, the terminal device receives pre-configuration information sent by a network device and an uplink reference signal transmission request triggered by a PDCCH order, then transmits an SRS to a corresponding target cell, and receives TA information fed back by the target cell from the source cell. The terminal device performs conditional LTM switch evaluation based on the TA value of the target cell and the pre-configuration information. When at least one target cell satisfies the execution condition, the terminal device applies a configuration parameter of the target cell, and then performs the RACH-less conditional LTM switch to switch to the target cell using the TA value of the target cell.

Optionally, the terminal device may first trigger SRS transmission via a PDCCH order to obtain the TA value of the target cell in advance, and then provide the TA value of the target cell and the pre-configuration information.

Optionally, the terminal device may also obtain system information of the target cell according to the pre-configuration information, and transmit the random access preamble according to a random access parameter carried in the system information to obtain the TA value of the target cell in advance.

Optionally, the terminal device may perform the conditional handover evaluation based on the received pre-configuration information. When at least one candidate cell satisfies the conditional handover execution condition, the terminal device may initiate a terminal device measurement of the TA value for the candidate cell, and perform the RACH-less conditional handover according to the measured TA value of the target cell.

Optionally, the terminal device may perform the conditional LTM switch evaluation based on the received pre-configuration information. When at least one candidate cell satisfies the conditional LTM switch execution condition, the terminal device may initiate a terminal device measurement of the TA value for the candidate cell, and perform the RACH-less conditional LTM switch according to the measured TA value of the target cell.

Optionally, the feedback information is carried in the random access response and/or LTM switch command.

Optionally, the feedback information includes the TA value of the candidate cell and/or the TA value of the LTM candidate cell.

Optionally, the downlink control information includes at least one of index information, random access configuration, and reference signal configuration.

Optionally, the radio resource control reconfiguration signaling includes at least one of the TA value of the serving cell, a conditional handover configuration for at least one candidate cell, a conditional LTM switch configuration, a terminal device measured TA value identifier, and a compensation value.

Optionally, the terminal device measured TA value identifier is used to trigger the terminal device to measure and/or calculate a measured TA value of a corresponding candidate cell.

Optionally, the measured TA value is measured and/or calculated by the terminal device using the TA value of the serving cell and/or the compensation value.

Optionally, the conditional handover configuration includes at least one of a conditional handover configuration index, an execution condition, a configuration parameter of a candidate cell, and a TA value of the candidate cell.

Optionally, the conditional LTM switch configuration includes at least one of a conditional LTM switch configuration index, an LTM execution condition, a configuration parameter of an LTM candidate cell, and a TA value of the LTM candidate cell.

Optionally, the random access response carries at least one of a TA value, uplink scheduling, configured scheduling information, and a radio network temporary identifier of at least one candidate cell and/or LTM candidate cell.

Optionally, the LTM switch command carries at least one of a TA value, uplink scheduling, configured scheduling information, and a radio network temporary identifier of at least one LTM candidate cell.

Optionally, the index information includes a conditional handover configuration index and/or a conditional LTM switch configuration index.

Optionally, the terminal device initiates a terminal device measurement of the TA value for at least one candidate cell in response to satisfying a measurement condition.

Optionally, system information of a corresponding candidate cell is acquired according to the configuration parameter of the candidate cell and/or the configuration parameter of the LTM candidate cell.

Optionally, the system information includes random access parameters and/or reference signal parameters.

With the technical solutions of this embodiment, it introduces a procedure for acquiring the TA value of the target cell in advance for conditional handover and/or conditional LTM switch.

Optionally, the RACH-less conditional handover includes: not executing a random access procedure during the conditional handover process, and directly handing over to the target cell after satisfying the handover condition, for example, the TA value of the candidate cell is zero or the TA value of the candidate cell is the same as the TA value of a current serving cell; and/or, transmitting a random access preamble and/or a reference signal in advance before executing the conditional handover, acquiring the TA value of the candidate cell from the serving cell, and then directly handing over to the target cell according to the acquired TA value after satisfying the handover condition.

Optionally, the RACH-less conditional LTM switch includes: not executing a random access procedure during the conditional LTM switch process, and directly handing over to the target cell after satisfying the handover condition, for example, the TA value of the LTM candidate cell is zero or the TA value of the LTM candidate cell is the same as the TA value of a current serving cell; and/or, transmitting a random access preamble and/or a reference signal in advance before executing the conditional LTM switch, acquiring the TA value of the LTM candidate cell from the serving cell, and then directly handing over to the target cell according to the acquired TA value after satisfying the LTM switch condition.

With the technical solutions of this embodiment, it clarifies the execution conditions for conditional LTM switch; and/or, performs the RACH-less using the corresponding TA value.

Specifically, through performing RACH-less conditional handover and/or conditional LTM switch in response to satisfying a first condition through the above scheme, this embodiment provides a conditional handover and/or conditional LTM switch method that supports RACH-less, to avoid prolonged service interruption caused by the terminal device executing random access; and/or, performing early uplink synchronization before handover helps reduce handover delay.

### Second Embodiment

Based on the first embodiment of the present application, this embodiment further discloses the processing method in the aforementioned embodiment.

Referring to FIG. 7, FIG. 7 is a schematic interaction flowchart according to the second embodiment in embodiments of the present invention. As shown in FIG. 7, a terminal device may transmit a random access preamble based on received pre-configuration information, so as to obtain a TA value of a target cell in advance.

Optionally, the terminal device reports a measurement report (MR, Measurement Report). Optionally, the measurement report is a Layer3 (L3, Layer3) measurement report.

Optionally, a source cell (which includes or is a first network device) acquires configuration of a candidate cell, where the configuration of the candidate cell includes: a configuration parameter of the candidate cell and/or a random access parameter.

Optionally, the candidate cell (which includes or is a second network device) may be a LTM candidate cell.

Optionally, configuration of the LTM candidate cell includes: a configuration parameter of the LTM candidate cell and/or the random access parameter.

Optionally, the source cell transmits a conditional handover configuration, where the conditional handover configuration includes at least one of: a conditional handover configuration index (Conditional handover configuration index), an execution condition (Execution condition), and configuration of a candidate cell.

Optionally, the terminal device locally stores the conditional handover configuration after receiving it.

Optionally, the conditional handover configuration is transmitted via RRC (Radio Resource Control, radio resource control) reconfiguration (RRCReconfiguration) signaling.

Optionally, the source cell may transmit the conditional handover configuration of at least one candidate cell, and distinguish candidate cells by the conditional handover configuration index.

Optionally, the conditional handover may also be a conditional LTM switch.

Optionally, a conditional LTM switch configuration includes at least one of a conditional LTM switch configuration index (Conditional LTM switch configuration index), an LTM execution condition (LTM execution condition), and a configuration parameter of an LTM candidate cell.

Optionally, the source cell may also transmit common (Common) random access parameters for subsequent conditional LTM switch.

Optionally, the terminal device transmits configuration confirmation information.

Optionally, configuration confirmation is transmitted via RRC reconfiguration complete (RRCReconfigurationComplete) signaling.

Optionally, the terminal device evaluates candidate cells according to the execution condition; and when at least one candidate cell satisfies the execution condition, the terminal device transmits the random access preamble to the candidate cell.

Optionally, the terminal device evaluates candidate cells according to the LTM execution condition; and when at least one LTM candidate cell satisfies the execution condition, the terminal device transmits the random access preamble to the LTM candidate cell.

Optionally, the terminal device returns to the source cell to receive response information after transmitting the random access preamble.

Optionally, satisfying the execution condition and/or the LTM execution condition includes: a signal strength satisfying a threshold, and/or, a signal strength satisfying a threshold and being maintained for a period of time.

Optionally, the candidate cell receives the random access preamble transmitted by the terminal device, calculates a corresponding TA value, and transmits the response information to the source cell via signaling.

Optionally, the candidate cell may also provide at least one of uplink scheduling (UL Grant), configured grant (CG, Configured Grant) information, and a radio network temporary identifier (RNTI, Radio Network Temporary Identifier) to the source cell. It should be noted that the transmitted response information can be any interaction signaling between base stations, which is not limited in this embodiment of the present application.

Optionally, a random access response (RAR, Random Access Response) from the source cell carries the TA value of the candidate cell, and/or the source cell transmits the random access response to the terminal device.

Optionally, if the terminal device transmitted the random access preamble to at least one candidate cell and/or LTM candidate cell during the process of transmitting the random access preamble, the random access response may carry a TA value of the at least one candidate cell and/or LTM candidate cell.

Optionally, the network device transmits at least one RAR to carry the TA value of the at least one candidate cell and/or LTM candidate cell.

Optionally, the random access response may also carry at least one of the uplink scheduling, the configured scheduling information, and the temporary radio network identifier of the candidate cell.

Optionally, after receiving the TA value of the candidate cell, the terminal device starts a corresponding timing advance timer (TAT, Timing Advance Timer).

Optionally, the source cell may also enable an LTM switch command to carry the TA value of the at least one LTM candidate cell.

Optionally, the LTM switch command may also carry at least one of uplink scheduling, configured scheduling information, and a radio network temporary identifier of the LTM candidate cell.

Optionally, the LTM switch command is carried via MAC (Media Access Control, media access control) layer signaling, for example, MAC subheader and/or MAC CE (Control Element).

Optionally, the terminal device initiates a RACH-Less (RACH-Less) conditional handover and/or conditional LTM switch based on the received TA value of the candidate cell and/or the TA value of the LTM candidate cell.

Optionally, the terminal device performs evaluation on the execution condition and/or LTM execution condition for the candidate cell. When at least one candidate cell still satisfies the execution condition or the LTM execution condition and the corresponding TAT is still running, the terminal device initiates the RACH-less conditional handover or conditional LTM switch.

Optionally, the terminal device applies the configuration parameter of the corresponding candidate cell and/or the configuration parameter of the LTM candidate cell.

Optionally, when the TAT has expired, the RACH-Less conditional handover and/or conditional LTM switch is performed.

Optionally, the terminal device transmits uplink data and/or RRC reconfiguration complete signaling to the target cell.

Optionally, in response to the uplink data and/or RRC reconfiguration complete signaling transmitted by the terminal device, the target cell transmits confirmation information and/or RRC reconfiguration complete confirmation, and completes the conditional handover or the conditional LTM switch.

Optionally, the RRC reconfiguration complete confirmation may be an automatic repeat request acknowledgement (ARQ ACK, Automatic Repeat request acknowledgement) and/or a hybrid automatic repeat request acknowledgement (HARQ-ACK, Hybrid automatic repeat request acknowledgement). For example, the terminal device transmits the RRC reconfiguration complete signaling and receives ARQ ACK and/or HARQ-ACK fed back by the candidate cell; and the terminal device transmits the first uplink data and receives ARQ ACK and/or HARQ-ACK fed back by the candidate cell.

Optionally, the terminal device completes the conditional handover or the conditional LTM switch after receiving the confirmation information from the candidate cell, and takes the candidate cell as a serving cell (Serving Cell).

Optionally, the terminal device still stores the conditional handover configuration and/or the conditional LTM switch configuration after completing the conditional handover or the conditional LTM switch.

With the technical solutions of this embodiment, specifically, it enables the terminal device to perform early uplink synchronization and/or acquire a TA value of a target cell in advance by pre-configuring random access parameters via the network device, and to perform RACH-less conditional handover and/or conditional LTM switch, thereby eliminating measurement reporting and/or handover signaling transmission, and/or performing early uplink synchronization; reducing signaling overhead and/or accelerating the handover procedure and/or reducing service interruption delay, and/or clarifying the RACH-less uplink conditional handover and/or conditional LTM switch procedure.

### Third Embodiment

Based on any one of the above embodiments of the present application, this embodiment further discloses the processing method in the aforementioned embodiment.

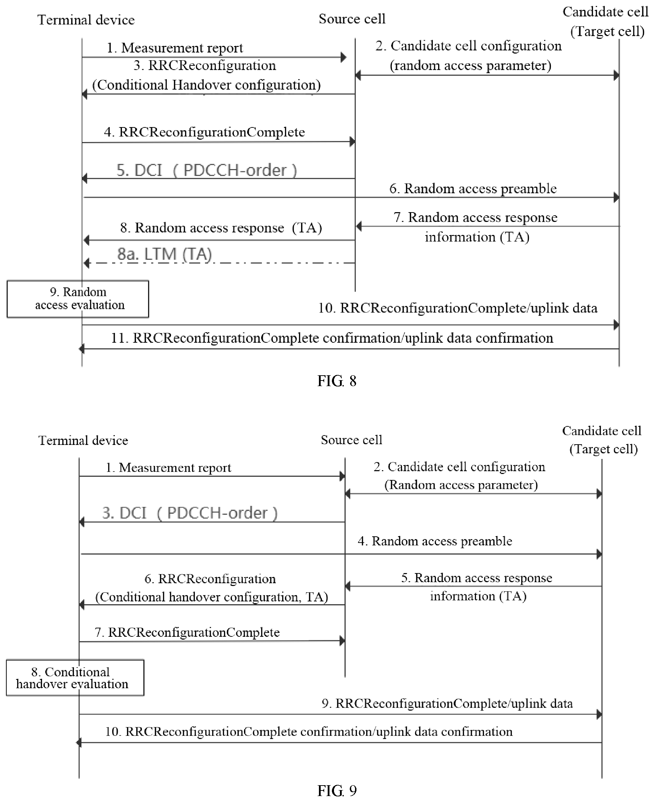

Referring to FIG. 8, FIG. 8 is a schematic interaction flowchart according to the third embodiment in embodiments of the present invention. As shown in FIG. 8, a terminal device may first receive pre-configuration information, and then triggers random access via a PDCCH order to acquire a TA value of a target cell in advance.

Optionally, the terminal device reports a measurement report. Optionally, the measurement report is a Layer3 measurement report.

Optionally, a source cell acquires configuration of a candidate cell, where the configuration of the candidate cell includes: a configuration parameter of the candidate cell and/or the random access parameter.

Optionally, the candidate cell may be a LTM candidate cell.

Optionally, configuration of the LTM candidate cell includes: a configuration parameter of the LTM candidate cell and/or the random access parameter.

Optionally, acquiring the configuration of the candidate cell and/or the configuration of the LTM candidate cell may be via any interaction signaling between base stations, which includes but not limited to: UL RRC MESSAGE TRANSFER, HANDOVER REQUEST, HANDOVER REQUEST ACKNOWLEDGE, UE CONTEXT MODIFICATION REQUEST, UE CONTEXT MODIFICATION RESPONSE, which is not limited in this embodiment of the present application.

Optionally, the source cell transmits conditional handover configuration, where conditional handover configuration includes at least one of a conditional handover configuration index, an execution condition, a configuration of a candidate cell.

Optionally, the terminal device locally stores the conditional handover configuration after receiving it.

Optionally, the conditional handover configuration is transmitted via RRC reconfiguration signaling.

Optionally, the source cell may transmit the conditional handover configuration of at least one candidate cell, and distinguish candidate cells by the conditional handover configuration index.

Optionally, the conditional handover may also be a conditional LTM switch.

Optionally, the conditional LTM switch configuration includes at least one of a conditional LTM switch configuration index, an LTM execution condition, a configuration parameter of an LTM candidate cell.

Optionally, the source cell may also transmit common random access parameters for subsequent LTM switch.

Optionally, the terminal device transmits configuration confirmation information.

Optionally, the configuration confirmation information is transmitted via RRC reconfiguration complete signaling.

Optionally, the network device sends DCI via PDCCH to instruct the terminal device to perform random access triggered by a PDCCH order.

Optionally, the DCI carries index information and/or random access configuration.

Optionally, the DCI carries at least one piece of index information and/or random access configuration.

Optionally, the index information is a conditional handover configuration index and/or a conditional LTM switch configuration index.

Optionally, after receiving random access control information triggered by the PDCCH order, the terminal device determines a candidate cell and random access parameters based on the index information and the conditional handover configuration, and transmits a random access preamble to the candidate cell according to the random access parameters.

Optionally, the terminal device transmits the random access preamble to the candidate cell according to the random access configuration.

Optionally, the terminal device determines the candidate cell and the random access parameters according to the index information and the conditional handover configuration, and then, transmits the random access preamble according to the random access parameters and the random access configuration.

Optionally, after transmitting the random access preamble, the terminal device receives response information from the source cell.

Optionally, the terminal device transmits the random access preamble to at least one candidate cell according to the at least one piece of index information and/or random access configuration.

Optionally, the terminal device transmits the random access preamble to at least one candidate cell according to a PDCCH-order random access triggered by at least one DCI.

Optionally, the terminal device determines the candidate cell to which the random access preamble is transmitted according to the index type carried in the DCI. For example, if the index information is the conditional handover configuration index, the terminal device transmits the random access preamble to a candidate cell.

Optionally, if the index information is the conditional LTM switch configuration index, the terminal device transmits the random access preamble to an LTM candidate cell.

Optionally, the candidate cell receives the random access preamble transmitted by the terminal device, calculates a corresponding TA value, and transmits the response information to the source cell via signaling.

Optionally, the candidate cell may also provide at least one of uplink scheduling, configured scheduling information, and a temporary radio network identifier to the source cell.

Optionally, the signaling used by the candidate cell to send response information may be any interaction signaling between base stations, which is not limited in this embodiment of the present application.

Optionally, the source cell transmits a random access response to the terminal device, where the random access response carries the TA value of the candidate cell.

Optionally, if the terminal transmitted the random access preamble to at least one candidate cell and/or LTM candidate cell during the process of transmitting the random access preamble, the random access response may carry a TA value of the at least one candidate cell and/or LTM candidate cell.

Optionally, the network device transmits at least one RAR, where the at least one RAR carries the TA value of the at least one candidate cell and/or LTM candidate cell.

Optionally, the random access response may also carry at least one of the uplink scheduling, the configured scheduling information, and the temporary radio network identifier of the candidate cell and/or the LTM candidate cell.

Optionally, after receiving the TA value of the candidate cell and/or the LTM candidate cell, the terminal device starts a corresponding timing advance timer.

Optionally, the source cell may also enable an LTM switch command to carry the TA value of the at least one LTM candidate cell.

Optionally, the LTM switch command may also carry at least one of uplink scheduling, configured scheduling information, and/or a radio network temporary identifier of the at least one LTM candidate cell.

Optionally, the LTM switch command is carried via MAC layer signaling, for example, MAC subheader and/or MAC CE.

Optionally, the terminal device performs evaluation on the execution condition and/or LTM execution condition for the candidate cell. When at least one candidate cell satisfies the execution condition or the LTM execution condition and the corresponding TAT is still running, the terminal device initiates the RACH-less conditional handover based on the received TA value of the candidate cell, or initiates the conditional LTM switch according to the TA value of the LTM candidate cell.

Optionally, the terminal device applies the configuration parameter of the corresponding candidate cell and/or the configuration parameter of the corresponding LTM candidate cell.

Optionally, when the TAT corresponding to the candidate cell or conditional LTM candidate cell satisfying the execution condition has expired, the RACH conditional handover and/or conditional LTM switch is performed.

Optionally, the terminal device transmits uplink data and/or RRC reconfiguration complete signaling to the target cell.

Optionally, in response to the uplink data and/or RRC reconfiguration complete signaling transmitted by the terminal device, the target cell transmits confirmation information and/or RRC reconfiguration complete confirmation, and completes the conditional handover or the conditional LTM switch.

Optionally, the RRC reconfiguration complete confirmation may be an automatic repeat request acknowledgement and/or a hybrid automatic repeat request acknowledgement. For example, the terminal device transmits the RRC reconfiguration complete signaling and receives ARQ ACK and/or HARQ-ACK fed back by the candidate cell; the terminal device transmits the first uplink data and receives ARQ ACK and/or HARQ-ACK fed back by the candidate cell.

Optionally, the terminal device completes the conditional handover and/or conditional LTM switch after receiving the confirmation information from the candidate cell, and takes the candidate cell as a serving cell.

Optionally, the terminal device still stores the conditional handover configuration and/or the conditional LTM switch configuration after completing the conditional handover or the conditional LTM switch.

With the technical solutions of this embodiment, specifically, it enables the terminal device to acquire a TA value of a target cell in advance by pre-configuring random access parameters and/or sending a request for transmitting random access in advance via the network device, and to perform RACH-less conditional handover and/or conditional LTM switch, thereby eliminating measurement reporting and/or handover signaling transmission, flexibly indicating cells requiring early uplink synchronization, reducing signaling overhead and/or accelerating the handover procedure and/or reducing service interruption delay, and/or clarifying the RACH-less conditional handover and/or conditional LTM switch procedure.

### Fourth Embodiment

Based on any one of the above embodiments of the present application, this embodiment further discloses the processing method in the aforementioned embodiment.

Referring to FIG. 9, FIG. 9 is a schematic interaction flowchart according to the fourth embodiment in embodiments of the present invention. As shown in FIG. 9, random access can be triggered via a PDCCH order first, and then a TA value of a target cell and pre-configuration information are provided to a terminal device.

Optionally, the terminal device reports a measurement report. Optionally, the measurement report is a Layer3 measurement report.

Optionally, a source cell acquires configuration of a candidate cell, where the configuration of the candidate cell includes: a configuration parameter of the candidate cell and/or the random access parameter.

Optionally, the candidate cell may be a LTM candidate cell.

Optionally, configuration of the LTM candidate cell includes: a configuration parameter of the LTM candidate cell and/or the random access parameter.

Optionally, acquiring the configuration of the candidate cell and/or the configuration of the LTM candidate cell may be via any interaction signaling between base stations, which includes but not limited to: UL RRC MESSAGE TRANSFER, HANDOVER REQUEST REQUEST, HANDOVER REQUEST ACKNOWLEDGE, UE CONTEXT MODIFICATION REQUEST, UE CONTEXT MODIFICATION RESPONSE, which is not limited in this embodiment of the present application.

Optionally, the network device sends DCI via PDCCH to instruct the terminal device to perform random access triggered by a PDCCH order.

Optionally, the DCI carries random access configuration.

Optionally, the DCI may also carry at least one piece of index information and/or at least one index random access configuration.

Optionally, the network device may also trigger the terminal device to transmit a random access preamble to at least one candidate cell by sending at least one DCI.

Optionally, after receiving random access control information triggered by the PDCCH order, the terminal device transmits the random access preamble to the candidate cell according to the random access configuration.

Optionally, the terminal device transmits the random access preamble to at least one candidate cell according to the at least one piece of index information and/or at least one index random access configuration.

Optionally, in response to a random access transmission request triggered by the at least one DCI, the terminal device transmits the random access preamble to at least one candidate cell.

Optionally, the candidate cell receives the random access preamble transmitted by the terminal, calculates a corresponding TA value, and transmits the response information to the source cell via signaling.

Optionally, the candidate cell may also provide at least one of uplink scheduling, configured scheduling information, and a temporary radio network identifier to the source cell.

Optionally, the signaling may be any interaction signaling between base stations, including but not limited to: HANDOVER REQUEST, HANDOVER REQUEST ACKNOWLEDGE, UE CONTEXT MODIFICATION REQUEST, UE CONTEXT MODIFICATION RESPONSE, which is not limited in this embodiment of the present application.

Optionally, the source cell transmits conditional handover configuration, where the conditional handover configuration includes at least one of a conditional handover configuration index, an execution condition, a configuration parameter of a candidate cell, and a TA value of a candidate cell.

Optionally, the terminal device locally stores the conditional handover configuration after receiving it.

Optionally, the conditional handover configuration is transmitted via RRC reconfiguration signaling.

Optionally, the source cell may transmit the conditional handover configuration of at least one candidate cell, and distinguish candidate cells by the conditional handover configuration index.

Optionally, the conditional handover may also be a conditional LTM switch.

Optionally, the conditional LTM switch configuration includes at least one of a conditional LTM switch configuration index, an LTM execution condition, a configuration parameter of an LTM candidate cell, and a TA value of the LTM candidate cell.

Optionally, after receiving the TA value of the candidate cell and/or the LTM candidate cell, the terminal device starts a corresponding TAT.

Optionally, the terminal device transmits configuration confirmation information.

Optionally, configuration confirmation is transmitted via RRC reconfiguration complete signaling.

Optionally, the terminal device performs evaluation on the execution condition and/or LTM execution condition for the candidate cell. When at least one candidate cell satisfies the execution condition or the LTM execution condition and the corresponding TAT is still running, the terminal device initiates the RACH-less conditional handover or conditional LTM switch based on the received TA value of the candidate cell.

Optionally, the terminal device applies the configuration parameter of the corresponding candidate cell and/or the configuration parameter of the corresponding LTM candidate cell.

Optionally, when the TAT corresponding to the candidate cell or conditional LTM candidate cell satisfying the execution condition has expired, the RACH conditional handover or conditional LTM switch is performed.

Optionally, the terminal device transmits uplink data and/or RRC reconfiguration complete signaling to the target cell.

Optionally, in response to the uplink data and/or RRC reconfiguration complete signaling transmitted by the terminal device, the target cell transmits confirmation information and/or RRC reconfiguration complete confirmation, and completes the conditional handover.

Optionally, the RRC reconfiguration complete confirmation may be an automatic repeat request acknowledgement and/or a hybrid automatic repeat request acknowledgement. For example, the terminal device transmits the RRC reconfiguration complete signaling and receives ARQ ACK and/or HARQ-ACK fed back by the candidate cell; the terminal device transmits the first uplink data and receives ARQ ACK and/or HARQ-ACK fed back by the candidate cell.

Optionally, the terminal device completes the conditional handover after receiving the confirmation information from the candidate cell, and takes the candidate cell as a serving cell.

Optionally, the terminal device still stores the conditional handover configuration and/or the conditional LTM switch configuration after completing the conditional handover or the conditional LTM switch, optionally, where the conditional handover configuration and/or the conditional LTM switch configuration also includes the TA value of the candidate cell and/or TA value of the LTM candidate cell.

With the technical solutions of this embodiment, specifically, it acquires a TA value of a target cell in advance by sending a request for transmitting random access in advance via the network device, provides the TA value of the target cell and/or the configuration parameters through pre-configuration, enabling the terminal device to perform RACH-less conditional handover and/or conditional LTM switch, thereby eliminating measurement reporting and/or handover signaling transmission, flexibly configuring cells that have performed early uplink synchronization, reducing signaling overhead and/or accelerating the handover procedure and/or reducing service interruption delay, and/or clarifying the RACH-less conditional handover and/or conditional LTM switch procedure.

### Fifth Embodiment

Based on any one of the above embodiments of the present application, this embodiment further discloses the processing method in the aforementioned embodiment.

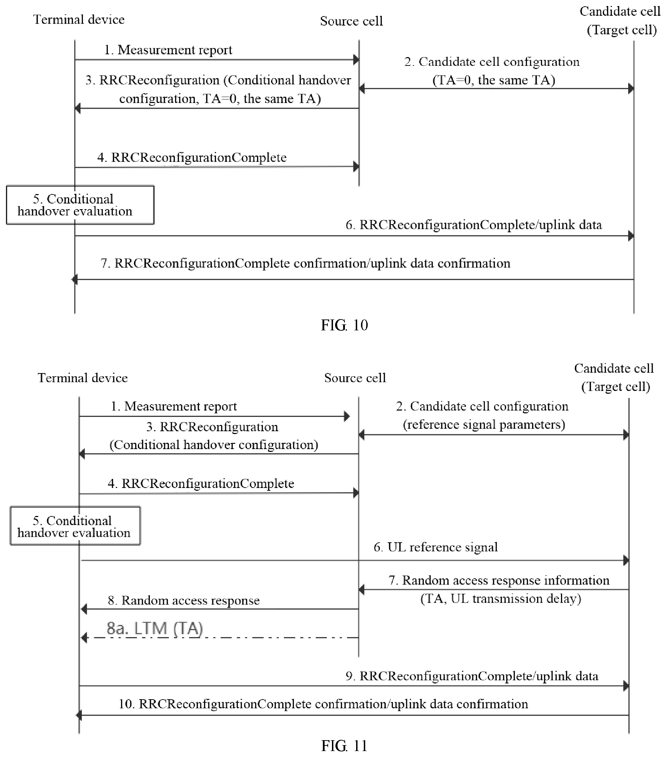

Referring to FIG. 10, FIG. 10 is a schematic interaction flowchart according to the fifth embodiment of the present invention. As shown in FIG. 10, if a TA value of a candidate cell is the same as that of a serving cell, or the TA value is equal to 0, the terminal device performs evaluation of conditions based on pre-configuration information. When at least one target cell satisfies the execution condition, the terminal device applies a configuration parameter of a target cell and performs RACH-less conditional handover to the target cell through the TA indication information of the target cell.

Optionally, the terminal device reports a measurement report. Optionally, the measurement report is a Layer3 measurement report.

Optionally, a source cell acquires configuration of a candidate cell, where configuration of a candidate cell includes: a configuration parameter of the candidate cell and/or TA information.

Optionally, the TA information includes: the TA value of the candidate cell is the same as that of the serving cell, or the TA value of the candidate cell is equal to 0.

Optionally, the candidate cell may be a LTM candidate cell.

Optionally, configuration of the LTM candidate cell includes: a configuration parameter of the LTM candidate cell and/or TA information of the LTM candidate cell.

Optionally, the TA information of the LTM candidate cell includes: the TA value of the LTM candidate cell is the same as that of the serving cell, and/or, the TA value of the LTM candidate cell is equal to 0.

Optionally, acquiring the configuration of the candidate cell and/or the configuration of the LTM candidate cell may be via any interaction signaling between base stations, which includes but not limited to: UL RRC MESSAGE TRANSFER, HANDOVER REQUEST, HANDOVER REQUEST ACKNOWLEDGE, UE CONTEXT MODIFICATION REQUEST, UE CONTEXT MODIFICATION RESPONSE, which is not limited in this embodiment of the present application.

Optionally, the source cell transmits conditional handover configuration, where the conditional handover configuration includes at least one of a conditional handover configuration index, an execution condition, a configuration of a candidate cell and TA information of the candidate cell.

Optionally, the terminal device locally stores the conditional handover configuration after receiving it.

Optionally, the conditional handover configuration is transmitted via RRC reconfiguration signaling.

Optionally, the source cell may transmit the conditional handover configuration of at least one candidate cell, and distinguish candidate cells by the conditional handover configuration index.

Optionally, the conditional handover may also be a conditional LTM switch.

Optionally, the conditional LTM switch configuration includes at least one of a conditional LTM switch configuration index, an LTM execution condition, a configuration of an LTM candidate cell, and TA information of the LTM candidate cell.

Optionally, the terminal device transmits configuration confirmation information.

Optionally, configuration confirmation is transmitted via RRC reconfiguration complete signaling.

Optionally, the terminal device performs evaluation on the execution condition and/or LTM execution condition for the candidate cell. When at least one candidate cell satisfies the execution condition or the LTM execution condition, the terminal device initiates the RACH-less conditional handover or conditional LTM switch based on the received TA information of the candidate cell.

Optionally, the terminal device applies the configuration parameter of the corresponding candidate cell and/or the configuration parameter of the corresponding LTM candidate cell.

Optionally, the terminal device transmits uplink data and/or RRC reconfiguration complete signaling to the target cell.

Optionally, in response to the uplink data and/or RRC reconfiguration complete signaling transmitted by the terminal device, the target cell transmits confirmation information and/or RRC reconfiguration complete confirmation, and completes the conditional handover.

Optionally, the RRC reconfiguration complete confirmation may be an automatic repeat request acknowledgement and/or a hybrid automatic repeat request acknowledgement. For example, the terminal device transmits the RRC reconfiguration complete signaling and receives ARQ ACK and/or HARQ-ACK fed back by the candidate cell; and the terminal device transmits the first uplink data and receives ARQ ACK and/or HARQ-ACK fed back by the candidate cell.

Optionally, the terminal device completes the conditional handover after receiving the confirmation information from the candidate cell, and takes the candidate cell as a serving cell.

Optionally, the terminal device still stores the conditional handover configuration and/or the conditional LTM switch configuration after completing the conditional handover or the conditional LTM switch.

With the technical solutions of this embodiment, specifically, it acquires uplink synchronization information of a handover cell in advance via the network device, and provides uplink synchronization information of the target cell through pre-configuration, enabling the terminal device to perform RACH-less conditional handover and/or conditional LTM switch, thereby eliminating measurement reporting and/or handover signaling transmission and/or executing a random access procedure, flexibly configuring cells that have been acquired in advance without additional uplink synchronization, reducing signaling overhead and/or accelerating the handover procedure and/or reducing service interruption delay, and/or clarifying the RACH-less conditional handover and/or conditional LTM switch procedure.

### Sixth Embodiment

Based on any one of the above embodiments of the present application, this embodiment further discloses the processing method in the aforementioned embodiment.

Referring to FIG. 11, FIG. 11 is a schematic interaction flowchart according to the sixth embodiment in embodiments of the present invention. As shown in FIG. 11, a terminal device transmits an uplink reference signal based on received pre-configuration information, so as to acquire a TA value of a target cell in advance.

Optionally, the terminal device reports a measurement report. Optionally, the measurement report is a Layer3 measurement report.

Optionally, a source cell acquires configuration of a candidate cell, where the configuration of the candidate cell includes: a configuration parameter and/or a reference signal parameter of the candidate cell.

Optionally, the candidate cell is a LTM candidate cell.

Optionally, configuration of the LTM candidate cell includes: a configuration parameter and/or a reference signal parameter of the LTM candidate cell.

Optionally, the source cell transmits conditional handover configuration, where the conditional handover configuration includes at least one of a conditional handover configuration index, an execution condition, a configuration parameter of a candidate cell.

Optionally, the terminal device locally stores the conditional handover configuration after receiving it.

Optionally, the conditional handover configuration is transmitted via RRC reconfiguration signaling.

Optionally, the source cell may transmit the conditional handover configuration of at least one candidate cell, and distinguish candidate cells by the conditional handover configuration index.

Optionally, the conditional handover may also be a conditional LTM switch.

Optionally, the conditional LTM switch configuration includes at least one of a conditional LTM switch configuration index, an LTM execution condition, a configuration parameter of an LTM candidate cell.

Optionally, the source cell may also transmit common reference signal parameters for subsequent conditional LTM switch.

Optionally, the terminal device transmits configuration confirmation information.

Optionally, configuration confirmation is transmitted via RRC reconfiguration complete signaling.

Optionally, the terminal device evaluates candidate cells according to the execution condition; and when at least one candidate cell satisfies the execution condition, the terminal device transmits the uplink reference signal to the candidate cell.

Optionally, the terminal device evaluates candidate cells according to the LTM execution condition; and when at least one LTM candidate cell satisfies the execution condition, the terminal device transmits the uplink reference signal to the LTM candidate cell.

Optionally, after transmitting the uplink reference signal, the terminal device receives response information from the source cell.

Optionally, satisfying the execution condition and/or the LTM execution condition includes: a signal strength satisfying a threshold, and/or, a signal strength satisfying a threshold and being maintained for a period of time.

Optionally, the candidate cell receives the uplink reference signal transmitted by the terminal device, calculates a corresponding TA value, and transmits the response information to the source cell via signaling.

Optionally, the candidate cell may also provide an uplink transmission delay to the source cell, and the source cell calculates the TA value of the candidate cell based on the transmission delay provided by the candidate cell.

Optionally, the candidate cell may also provide at least one of uplink scheduling, configured scheduling information, and a temporary radio network identifier to the source cell.

Optionally, the signaling may be any interaction signaling between base stations, including but not limited to: HANDOVER REQUEST, HANDOVER REQUEST ACKNOWLEDGE, UE CONTEXT MODIFICATION REQUEST, UE CONTEXT MODIFICATION RESPONSE, which is not limited in this embodiment of the present application.

Optionally, the source cell transmits a random access response to the terminal device, where the random access response carries the TA value of the candidate cell.

Optionally, if the terminal device transmitted the uplink reference signal to at least one candidate cell and/or LTM candidate cell during the process of transmitting the uplink reference signal, the random access response may carry the TA value of the at least one candidate cell.

Optionally, the network device transmits at least one RAR, where the at least one RAR carries the TA value of the at least one candidate cell and/or LTM candidate cell.

Optionally, the random access response may also carry at least one of the uplink scheduling, the configured scheduling information, and the temporary radio network identifier of the candidate cell.

Optionally, after receiving the TA value of the candidate cell, the terminal device starts a corresponding timing advance timer.

Optionally, the source cell may also enable an LTM switch command to carry the TA value of the at least one LTM candidate cell.

Optionally, the LTM switch command may also carry at least one of uplink scheduling, configured scheduling information, and a radio network temporary identifier of the LTM candidate cell.

Optionally, the LTM switch command is carried via MAC layer signaling, for example, MAC subheader and/or MAC CE.

Optionally, the terminal device initiates a RACH-Less conditional handover or LTM execution condition based on the received TA value of the candidate cell and/or the TA value of the LTM candidate cell.

Optionally, the terminal device performs evaluation on the execution condition and/or LTM execution condition for the candidate cell. When at least one candidate cell still satisfies the execution condition or the LTM execution condition and the corresponding TAT is still running, the terminal device initiates the RACH-less conditional handover or LTM execution condition.

Optionally, the terminal device applies the configuration parameter of the corresponding candidate cell and/or the configuration parameter of the corresponding LTM candidate cell.

Optionally, if the TAT has expired, the RACH conditional handover and/or conditional LTM switch is performed.

Optionally, in response to the uplink data and/or RRC reconfiguration complete signaling transmitted by the terminal device, the target cell transmits confirmation information and/or RRC reconfiguration complete confirmation, and completes the conditional handover or the conditional LTM switch.

Optionally, the RRC reconfiguration complete confirmation may be an automatic repeat request acknowledgement and/or a hybrid automatic repeat request acknowledgement. For example, the terminal device transmits the RRC reconfiguration complete signaling and receives ARQ ACK and/or HARQ-ACK fed back by the candidate cell; and the terminal device transmits the first uplink data and receives ARQ ACK and/or HARQ-ACK fed back by the candidate cell.

Optionally, the terminal device completes the conditional handover or the conditional LTM switch after receiving the confirmation information from the candidate cell, and takes the candidate cell as a serving cell (Serving Cell).

Optionally, the terminal device still stores the conditional handover configuration and/or the conditional LTM switch configuration after completing the conditional handover or the conditional LTM switch.

With the technical solutions of this embodiment, specifically, it enables the terminal device to perform early uplink synchronization and/or acquire a TA value of a target cell in advance by pre-configuring a reference signal parameter via the network device, and to perform RACH-less conditional handover and/or conditional LTM switch, thereby eliminating measurement reporting and/or handover signaling transmission and performing early uplink synchronization; reducing signaling overhead and/or accelerating the handover procedure and/or reducing service interruption delay, and/or clarifying the RACH-less uplink conditional handover and/or conditional LTM switch procedure.

### Seventh Embodiment

Based on any one of the above embodiments of the present application, this embodiment further discloses the processing method in the aforementioned embodiment.

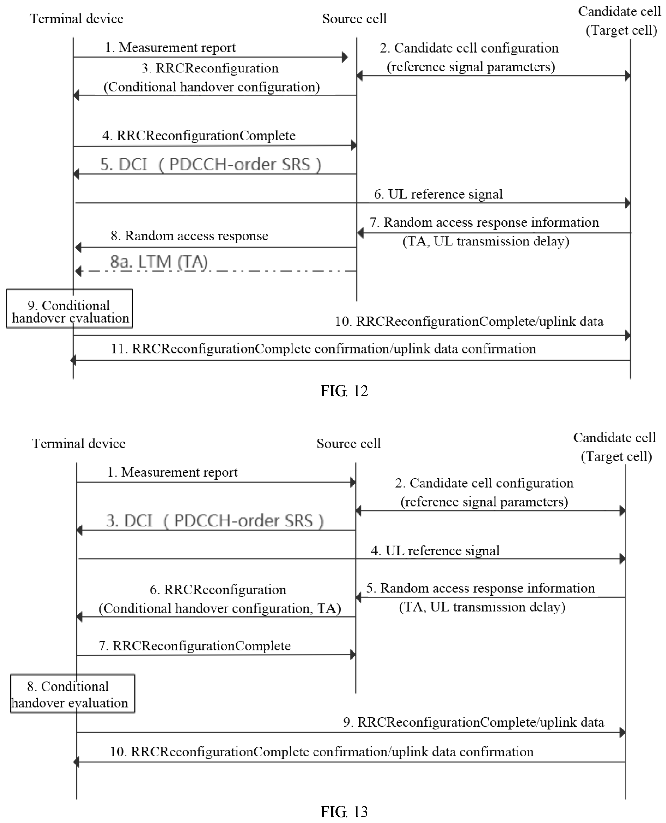

Referring to FIG. 12, FIG. 12 is a schematic interaction flowchart according to the seventh embodiment in embodiments of the present invention. As shown in FIG. 12, a terminal device first receives pre-configuration information, and then triggers SRS transmission via a PDCCH order to acquire a TA value of a target cell in advance.

Optionally, the terminal device reports a measurement report. Optionally, the measurement report is a Layer3 measurement report.

Optionally, a source cell acquires configuration of a candidate cell, where configuration of the candidate cell includes a configuration parameter and/or a reference signal parameter of the candidate cell.

Optionally, the candidate cell may be a LTM candidate cell.

Optionally, configuration of the LTM candidate cell includes: a configuration parameter and a reference signal parameter of the LTM candidate cell.

Optionally, acquiring the configuration of the candidate cell and/or the configuration of the LTM candidate cell may be via any interaction signaling between base stations, which includes but not limited to: UL RRC MESSAGE TRANSFER, HANDOVER REQUEST, HANDOVER REQUEST ACKNOWLEDGE, UE CONTEXT MODIFICATION REQUEST, UE CONTEXT MODIFICATION RESPONSE, which is not limited in this embodiment of the present application.

Optionally, the source cell transmits conditional handover configuration, where the conditional handover configuration includes at least one of a conditional handover configuration index, an execution condition, a configuration parameter of a candidate cell.

Optionally, the terminal device locally stores the conditional handover configuration after receiving it.

Optionally, the conditional handover configuration is transmitted via RRC reconfiguration signaling.

Optionally, the source cell may transmit the conditional handover configuration of at least one candidate cell, and distinguish candidate cells by the conditional handover configuration index.

Optionally, the conditional handover may also be a conditional LTM switch.

Optionally, the conditional LTM switch configuration includes at least one of a conditional LTM switch configuration index, an LTM execution condition, a configuration parameter of an LTM candidate cell.

Optionally, the source cell may also transmit common reference signal parameters (common reference signal parameters) for subsequent LTM switch.

Optionally, the terminal device transmits configuration confirmation information.

Optionally, configuration confirmation is transmitted via RRC reconfiguration complete signaling.

Optionally, the network device sends DCI via PDCCH to instruct the terminal device to perform uplink reference signal transmission triggered by a PDCCH order.

Optionally, the DCI carries index information and/or reference signal configuration.

Optionally, the DCI carries at least one piece of index information and/or reference signal configuration.

Optionally, the index information is a conditional handover configuration index and/or a conditional LTM switch configuration index.

Optionally, after receiving reference signal control information triggered by the PDCCH order, the terminal device determines a candidate cell and reference signal parameters based on the index information and the conditional handover configuration, and transmits an uplink reference signal to the candidate cell according to the reference signal parameters.

Optionally, the terminal device transmits the uplink reference signal to the candidate cell according to the reference signal configuration.

Optionally, the terminal device determines the candidate cell and the reference signal parameters according to the index information and the conditional handover configuration, and then, transmits the uplink reference signal according to the reference signal parameters.

Optionally, after transmitting the uplink reference signal, the terminal device receives response information from the source cell.

Optionally, the terminal device transmits the uplink reference signal to at least one candidate cell according to at least one piece of index information and/or reference signal configuration.

Optionally, the terminal device transmits the uplink reference signal to at least one candidate cell according to a PDCCH-order uplink reference signal triggered by at least one DCI.

Optionally, the terminal device determines the candidate cell to which the uplink reference signal is transmitted according to the index type carried in the DCI. For example, if the index information is the conditional handover configuration index, the terminal device transmits the uplink reference signal to a candidate cell.

Optionally, if the index information is the conditional LTM switch configuration index, the terminal device transmits the uplink reference signal to an LTM candidate cell.

Optionally, the candidate cell receives the uplink reference signal transmitted by the terminal device, calculates a corresponding TA value, and transmits the response information to the source cell via signaling.

Optionally, the candidate cell may also provide at least one of uplink scheduling, configured scheduling information, and a temporary radio network identifier to the source cell.

Optionally, the candidate cell may also provide an uplink transmission delay to the source cell, and the source cell calculates the TA value of the candidate cell based on the transmission delay provided by the candidate cell.

Optionally, the signaling may be any interaction signaling between base stations, including but not limited to: HANDOVER REQUEST, HANDOVER REQUEST ACKNOWLEDGE, UE CONTEXT MODIFICATION REQUEST, UE CONTEXT MODIFICATION RESPONSE, which is not limited in this embodiment of the present application.

Optionally, the source cell transmits a random access response to the terminal device, where the random access response carries the TA value of the candidate cell

Optionally, if the terminal device transmitted the uplink reference signal to at least one candidate cell and/or LTM candidate cell during the process of transmitting the uplink reference signal, the random access response may carry the TA value of the at least one candidate cell and/or LTM candidate cell.

Optionally, the network device transmits at least one RAR, where the at least one RAR carries the TA value of the at least one candidate cell and/or LTM candidate cell.

Optionally, the random access response may also carry at least one of the uplink scheduling, the configured scheduling information, and the temporary radio network identifier of the LTM candidate cell and the candidate cell.

Optionally, after receiving the TA value of the candidate cell and/or the TA value of the LTM candidate cell, the terminal device starts a corresponding timing advance timer.

Optionally, the source cell may also enable an LTM switch command to carry the TA value of the at least one LTM candidate cell.

Optionally, the LTM switch command may also carry at least one of uplink scheduling, configured scheduling information, and a radio network temporary identifier of the LTM candidate cell.

Optionally, the LTM switch command is carried via MAC layer signaling, for example, MAC subheader and/or MAC CE.

Optionally, the terminal device performs evaluation on the execution condition and/or LTM execution condition for the candidate cell. When at least one candidate cell satisfies the execution condition or the LTM execution condition and the corresponding TAT is still running, the terminal device initiates the RACH-less conditional handover based on the received TA value of the candidate cell, and/or initiates the RACH-less conditional LTM switch according to the TA value of the LTM candidate cell.

Optionally, the terminal device applies the configuration parameter of the corresponding candidate cell and/or the configuration parameter of the corresponding LTM candidate cell.

Optionally, when the TAT corresponding to the candidate cell or conditional LTM candidate cell satisfying the execution condition has expired, the RACH conditional handover or conditional LTM switch is performed.

Optionally, the terminal device transmits uplink data and/or RRC reconfiguration complete signaling to the target cell.

Optionally, in response to the uplink data and/or RRC reconfiguration complete signaling transmitted by the terminal device, the target cell transmits confirmation information and/or RRC reconfiguration complete confirmation, and completes the conditional handover or the conditional LTM switch.

Optionally, the RRC reconfiguration complete confirmation may be an automatic repeat request acknowledgement and/or a hybrid automatic repeat request acknowledgement. For example, the terminal device transmits the RRC reconfiguration complete signaling and receives ARQ ACK and/or HARQ-ACK fed back by the candidate cell; the terminal device transmits the first uplink data and receives ARQ ACK and/or HARQ-ACK fed back by the candidate cell.

Optionally, the terminal device completes the conditional handover and/or conditional LTM switch after receiving the confirmation information from the candidate cell, and takes the candidate cell as a serving cell.

Optionally, the terminal device still stores the conditional handover configuration and/or the conditional LTM switch configuration after completing the conditional handover or the conditional LTM switch.

With the technical solutions of this embodiment, specifically, it enables the terminal device to acquire a TA value of a target cell in advance by pre-configuring reference signal parameters and/or sending a request for transmitting uplink reference signal via the network device, and to perform RACH-less conditional handover and/or conditional LTM switch, thereby eliminating measurement reporting and/or handover signaling transmission, flexibly indicating cells requiring early uplink synchronization, reducing signaling overhead and/or accelerating the handover procedure and/or reducing service interruption delay, and/or clarifying the RACH-less conditional handover and/or conditional LTM switch procedure.

### Eighth Embodiment

Based on any one of the above embodiments of the present application, this embodiment further discloses the processing method in the aforementioned embodiment.

Referring to FIG. 13, FIG. 13 is a schematic interaction flowchart according to the eighth embodiment in embodiments of the present invention. As shown in FIG. 13, SRS transmission is first triggered via a PDCCH order, and then a TA value of a target cell and pre-configuration information are provided to a terminal device.

Optionally, the terminal device reports a measurement report. Optionally, the measurement report is a Layer3 measurement report.

Optionally, a source cell acquires configuration of a candidate cell, where the configuration of the candidate cell includes a configuration parameter and/or a reference signal parameter of the candidate cell.

Optionally, the candidate cell may be a LTM candidate cell.

Optionally, configuration of the LTM candidate cell includes: a configuration parameter and/or a reference signal parameter of the LTM candidate cell.

Optionally, acquiring the configuration of the candidate cell and/or the configuration of the LTM candidate cell may be via any interaction signaling between base stations, which includes but not limited to: UL RRC MESSAGE TRANSFER, HANDOVER REQUEST, HANDOVER REQUEST ACKNOWLEDGE, UE CONTEXT MODIFICATION REQUEST, UE CONTEXT MODIFICATION RESPONSE, which is not limited in this embodiment of the present application.

Optionally, the network device sends DCI via PDCCH to instruct the terminal device to perform uplink reference signal transmission triggered by a PDCCH order. Optionally, the DCI carries reference signal configuration.

Optionally, the DCI may also carry at least one piece of index information and/or at least one reference signal configuration.

Optionally, the network device may also trigger the terminal device to transmit an uplink reference signal to at least one candidate cell by sending at least one DCI.

Optionally, after receiving uplink reference signal control information triggered by the PDCCH order, the terminal device transmits an uplink reference signal to the candidate cell according to the reference signal configuration.

Optionally, the terminal device transmits the uplink reference signal to at least one candidate cell according to at least one piece of index information and/or at least one reference signal configuration.

Optionally, in response to an uplink reference signal request triggered by at least one DCI, the terminal device transmits the uplink reference signal to at least one candidate cell.

Optionally, the candidate cell receives the uplink reference signal transmitted by the terminal device, calculates a corresponding TA value, and transmits the response information to the source cell via signaling.

Optionally, the candidate cell may also provide an uplink transmission delay to the source cell, and the source cell calculates the TA value of the candidate cell based on the transmission delay provided by the candidate cell.

Optionally, the candidate cell may also provide at least one of uplink scheduling, configured scheduling information, and a temporary radio network identifier to the source cell.

Optionally, the signaling may be any interaction signaling between base stations, including but not limited to: HANDOVER REQUEST, HANDOVER REQUEST ACKNOWLEDGE, UE CONTEXT MODIFICATION REQUEST, UE CONTEXT MODIFICATION RESPONSE, which is not limited in this embodiment of the present application.

Optionally, the source cell transmits conditional handover configuration, where conditional handover configuration includes at least one of a conditional handover configuration index, an execution condition, a configuration parameter of a candidate cell, and a TA value of the candidate cell.

Optionally, the terminal device locally stores the conditional handover configuration after receiving it.

Optionally, the conditional handover configuration is transmitted via RRC reconfiguration signaling.

Optionally, the source cell may transmit the conditional handover configuration of at least one candidate cell, and distinguish candidate cells by the conditional handover configuration index.

Optionally, the conditional handover may also be a conditional LTM switch.

Optionally, the conditional LTM switch configuration includes at least one of a conditional LTM switch configuration index, an LTM execution condition, a configuration parameter of an LTM candidate cell, and a TA value of the LTM candidate cell.

Optionally, after receiving the TA value of the candidate cell and/or the LTM candidate cell, the terminal device starts a corresponding TAT.

Optionally, the terminal device transmits configuration confirmation information.

Optionally, configuration confirmation is transmitted via RRC reconfiguration complete signaling.

Optionally, the terminal device performs evaluation on the execution condition and/or LTM execution condition for the candidate cell. When at least one candidate cell satisfies the execution condition or the LTM execution condition and the corresponding TAT is still running, the terminal device initiates the RACH-less conditional handover or conditional LTM switch based on the received TA value of the candidate cell.

Optionally, the terminal device applies the configuration parameter of the corresponding candidate cell and/or the configuration parameter of the corresponding LTM candidate cell.

Optionally, when the TAT corresponding to the candidate cell and/or conditional LTM candidate cell satisfying the execution condition has expired, the RACH-Less conditional handover or conditional LTM switch is performed.

Optionally, the terminal device transmits uplink data and/or RRC reconfiguration complete signaling to the target cell.

Optionally, in response to the uplink data and/or RRC reconfiguration complete signaling transmitted by the terminal device, the target cell transmits confirmation information and/or RRC reconfiguration complete confirmation, and completes the conditional handover.

Optionally, the RRC reconfiguration complete confirmation may be an automatic repeat request acknowledgement and/or a hybrid automatic repeat request acknowledgement. For example, the terminal device transmits the RRC reconfiguration complete signaling and receives ARQ ACK and/or HARQ-ACK fed back by the candidate cell; the terminal device transmits the first uplink data and receives ARQ ACK and/or HARQ-ACK fed back by the candidate cell.

Optionally, the terminal device completes the conditional handover after receiving the confirmation information from the candidate cell, and takes the candidate cell as a serving cell.

Optionally, the terminal device still stores the conditional handover configuration and/or the conditional LTM switch configuration after completing the conditional handover or the conditional LTM switch. Optionally, the conditional handover configuration includes the TA value of the candidate cell, and/or the conditional LTM switch configuration includes the TA value of the LTM candidate cell.

With the technical solutions of this embodiment, specifically, it acquires a TA value of a target cell in advance by sending a request for transmitting uplink reference signal via the network device, provides the TA value of the target cell and/or the configuration parameters through pre-configuration, enabling the terminal device to perform RACH-less conditional handover and/or conditional LTM switch, thereby eliminating measurement reporting and/or handover signaling transmission, flexibly configuring cells that have performed early uplink synchronization, reducing signaling overhead and/or accelerating the handover procedure and/or reducing service interruption delay, and/or clarifying the RACH-less conditional handover and/or conditional LTM switch procedure.

### Ninth Embodiment

Based on any one of the above embodiments of the present application, this embodiment further discloses the processing method in the aforementioned embodiment.

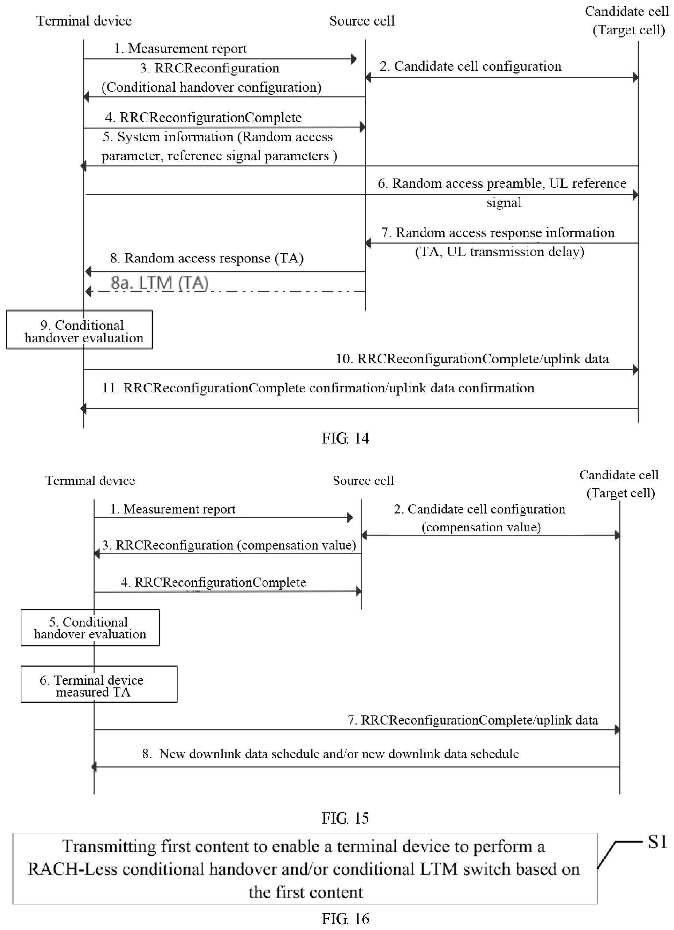

Referring to FIG. 14, FIG. 14 is a schematic interaction flowchart according to the ninth embodiment in embodiments of the present invention. As shown in FIG. 14, a terminal device acquires system information of a target cell according to pre-configuration information, and transmit a random access preamble according to a random access parameter carried in the system information to acquire the TA value of the target cell in advance.

Optionally, the terminal device reports a measurement report. Optionally, the measurement report is a Layer3 measurement report.

Optionally, a source cell acquires configuration of a candidate cell, where the configuration of the candidate cell includes a configuration parameter of the candidate cell.

Optionally, the candidate cell may be a LTM candidate cell.

Optionally, configuration of the LTM candidate cell includes: a configuration parameter of the LTM candidate cell.

Optionally, the source cell transmits conditional handover configuration, where the conditional handover configuration includes at least one of a conditional handover configuration index, an execution condition, a configuration parameter of a candidate cell.

Optionally, the terminal device locally stores the conditional handover configuration after receiving it.

Optionally, the conditional handover configuration is transmitted via RRC reconfiguration signaling.

Optionally, the source cell may transmit the conditional handover configuration of at least one candidate cell, and distinguish candidate cells by the conditional handover configuration index.

Optionally, the conditional handover may also be a conditional LTM switch.

Optionally, the conditional LTM switch configuration includes at least one of a conditional LTM switch configuration index, an LTM execution condition, a configuration parameter of an LTM candidate cell.

Optionally, the terminal device transmits configuration confirmation information.

Optionally, configuration confirmation is transmitted via RRC reconfiguration complete signaling.

Optionally, the terminal device acquires corresponding system information according to the configuration of the candidate cell and/or the configuration of the LTM candidate cell, where the system information includes random access parameters and/or reference signal parameters.

Optionally, the terminal device transmits a random access preamble and/or an uplink reference signal according to the random access parameters and/or reference signal parameters.

Optionally, when the source cell configures at least one conditional handover configuration and/or conditional LTM switch configuration, the terminal device may transmit a random access preamble and/or an uplink reference signal to at least one candidate cell and/or LTM candidate cell.

Optionally, the terminal device may evaluate candidate cells and/or LTM candidate cells according to an execution condition. When at least one candidate cell and/or LTM candidate cell satisfies the execution condition, the terminal device acquires the system information of the corresponding cell, where the system information includes the random access parameters and/or reference signal parameters. The terminal device transmits the random access preamble and/or the uplink reference signal according to the random access parameters and/or reference signal parameters.

Optionally, after transmitting the random access preamble and/or the uplink reference signal, the terminal device receives response information from the source cell.

Optionally, satisfying the execution condition and/or the LTM execution condition includes: a signal strength satisfying a threshold, and/or, a signal strength satisfying a threshold and being maintained for a period of time.

Optionally, the candidate cell and/or the LTM candidate cell receives the uplink reference signal transmitted by the terminal device, calculates a corresponding TA value, and transmits the response information to the source cell via signaling.

Optionally, the candidate cell and/or the LTM candidate cell may also provide an uplink transmission delay to the source cell, and the source cell calculates the TA value of the candidate cell based on the transmission delay provided by the candidate cell.

Optionally, the candidate cell and/or the LTM candidate cell may also provide uplink scheduling and/or configured scheduling information, and/or a temporary radio network identifier to the source cell. Optionally, the signaling used may be any interaction signaling between base stations, including but not limited to: HANDOVER REQUEST, HANDOVER REQUEST ACKNOWLEDGE, UE CONTEXT MODIFICATION REQUEST, UE CONTEXT MODIFICATION RESPONSE, which is not limited in this embodiment of the present application.

Optionally, the source cell transmits a random access response to the terminal device, where the random access response carries the TA value of the candidate cell and/or the LTM candidate cell.

Optionally, if the terminal device transmitted the random access preamble and/or the uplink reference signal to at least one candidate cell and/or LTM candidate cell during the process of transmitting the random access preamble and/or the uplink reference signal, the random access response may carry the TA value of the at least one candidate cell and/or LTM candidate cell.

Optionally, the network device transmits at least one RAR, where the at least one RAR carries the TA value of the at least one candidate cell and/or LTM candidate cell.

Optionally, the random access response may also carry at least one of the uplink scheduling, the configured scheduling information, and the temporary radio network identifier of the candidate cell and/or the LTM candidate cell.

Optionally, after receiving the TA value of the candidate cell, the terminal device starts a corresponding timing advance timer.

Optionally, the source cell may also enable an LTM switch command to carry the TA value of the at least one LTM candidate cell.

Optionally, the LTM switch command may also carry at least one of uplink scheduling, configured scheduling information, and a radio network temporary identifier of the at least one LTM candidate cell.

Optionally, the LTM switch command is carried via MAC layer signaling, for example, MAC subheader and/or MAC CE.

Optionally, the terminal device performs evaluation on the execution condition and/or LTM execution condition for the candidate cell. When at least one candidate cell satisfies the execution condition or the LTM execution condition and the corresponding TAT is still running, the terminal device initiates the RACH-less conditional handover or the LTM execution condition based on the received TA value of the candidate cell or the received TA value of the LTM candidate cell.

Optionally, if the candidate cell already satisfies the execution condition and/or LTM execution condition during the process of the terminal device transmitting the random access preamble and/or the uplink reference signal, then after receiving the TA value of the candidate cell or the TA value of the LTM candidate cell sent by the source cell, the terminal device immediately performs the RACH-less conditional handover or conditional LTM switch.

Optionally, the terminal device applies the configuration parameter of the corresponding candidate cell and/or the configuration parameter of the corresponding LTM candidate cell.

Optionally, when the TAT corresponding to the candidate cell or conditional LTM candidate cell satisfying the execution condition has expired, the RACH-Less conditional handover or conditional LTM switch is performed.

Optionally, the terminal device transmits uplink data and/or RRC reconfiguration complete signaling to the target cell.

Optionally, in response to the uplink data and/or RRC reconfiguration complete signaling transmitted by the terminal device, the target cell transmits confirmation information and/or RRC reconfiguration complete confirmation, and completes the conditional handover or the conditional LTM switch.

Optionally, the RRC reconfiguration complete confirmation may be an automatic repeat request acknowledgement and/or a hybrid automatic repeat request acknowledgement. For example, the terminal device transmits the RRC reconfiguration complete signaling and receives ARQ ACK and/or HARQ-ACK fed back by the candidate cell; the terminal device transmits the first uplink data and receives ARQ ACK and/or HARQ-ACK fed back by the candidate cell.

Optionally, the terminal device completes the conditional handover or the conditional LTM switch after receiving the confirmation information from the candidate cell, and takes the candidate cell as a serving cell.

Optionally, the terminal device still stores the conditional handover configuration and/or the conditional LTM switch configuration after completing the conditional handover and/or conditional LTM switch.

With the technical solutions of this embodiment, specifically, information of the candidate cell is pre-configured via the network device, the terminal device may perform early uplink synchronization and/or acquire a TA value of a target cell in advance according to pre-configured information, and perform RACH-less conditional handover and/or conditional LTM switch, thereby eliminating measurement reporting and/or handover signaling transmission and performing early uplink synchronization and/or reserved resource waste; reducing signaling overhead and/or accelerating the handover procedure, reducing service interruption delay, and/or, clarifying the RACH-less uplink conditional handover and/or conditional LTM switch procedure.

### Tenth Embodiment

Based on any one of the above embodiments of the present application, this embodiment further discloses the processing method in the aforementioned embodiment.

Optionally, after reporting a measurement report, if the terminal device first receives conditional handover configuration and/or conditional LTM switch configuration of at least one candidate cell sent by the source cell, it may first perform conditional handover evaluation based on an execution condition in the conditional handover configuration and/or conditional LTM switch configuration, then transmit a random access preamble and/or uplink reference signal to at least one candidate cell satisfying the execution condition based on an evaluation result, and receive response information from the source cell after transmitting the random access preamble and/or the uplink reference signal. The candidate cell receives the random access preamble and/or the uplink reference signal sent by the terminal device, and sends the corresponding TA value and/or uplink transmission delay to the source cell via signaling. The source cell may send the TA value of the candidate cell and/or the LTM candidate cell, carried in an RAR and/or LTM switch command, to the terminal device, enabling the terminal device to initiate a RACH-less conditional handover and/or conditional LTM switch.

Optionally, after reporting a measurement report, if the terminal device first receives conditional handover configuration and/or conditional LTM switch configuration of at least one candidate cell sent by the source cell, and also receives DCI sent by the network device via PDCCH (used to request the terminal device to perform a random access and/or uplink reference signal transmission triggered by a PDCCH-order), then after receiving the request of random access control information and/or uplink reference signal transmission triggered by the PDCCH-order, it may transmit a random access preamble according to random access parameters and/or random access configuration, and/or, transmit an uplink reference signal according to reference signal parameters and/or random access configuration, and receive response information from the source cell after transmitting the random access preamble and/or the uplink reference signal. The candidate cell receives the random access preamble and/or the uplink reference signal sent by the terminal device, and sends the corresponding TA value and/or uplink transmission delay to the source cell via signaling. The source cell may send the TA value of the candidate cell and/or the LTM candidate cell, carried in an RAR and/or LTM switch command, to the terminal device, enabling the terminal device to further perform conditional handover evaluation, and then initiate the RACH-less conditional handover to a candidate cell satisfying the execution condition according to the evaluation result, and/or initiate the conditional LTM switch to a LTM candidate cell satisfying the execution condition.

Optionally, after reporting a measurement report, if the terminal device receives DCI sent by the network device via PDCCH (used to request the terminal device to perform a random access and/or uplink reference signal transmission triggered by a PDCCH-order), then after receiving the request of random access control information and/or uplink reference signal transmission triggered by the PDCCH-order, it may transmit a random access preamble according to random access parameters and/or random access configuration, and/or, transmit an uplink reference signal according to reference signal parameters and/or random access configuration, and receive response information from the source cell after transmitting the random access preamble and/or the uplink reference signal. The candidate cell receives the random access preamble and/or the uplink reference signal sent by the terminal device, and sends the corresponding TA value and/or uplink transmission delay to the source cell via signaling. The source cell may send the TA value of the candidate cell and/or the LTM candidate cell, carried in an RAR and/or LTM switch command, to the terminal device, and send conditional handover configuration and/or conditional LTM switch configuration of the corresponding candidate cell, enabling the terminal device to perform conditional handover evaluation based on an execution condition in the conditional handover configuration and/or conditional LTM switch configuration, and then initiate the RACH-less conditional handover to a candidate cell satisfying the execution condition according to the evaluation result, and/or initiate the RACH-less conditional LTM switch to a LTM candidate cell satisfying the execution condition.

With the technical solutions of this embodiment, specifically, it enables the terminal device to flexibly determine an manner for acquiring a TA value of a target cell based on the content and/or sequence of configuration information and/or DCI sent by the network device, and perform the RACH-less conditional handover and/or conditional LTM switch, thereby eliminating measurement reporting and/or handover signaling transmission and performing early uplink synchronization and/or reserved resource waste; reducing signaling overhead and/or accelerating the handover procedure, reducing service interruption delay, and/or, clarifying the RACH-less uplink conditional handover and/or conditional LTM switch procedure.

### Eleventh Embodiment

FIG. 15 is a schematic interaction flowchart according to the eleventh embodiment in embodiments of the present invention. This embodiment proposes a method for obtaining a TA value of a target cell through autonomous measurement by a terminal device.

In existing protocols, the execution of early uplink synchronization by a terminal device is entirely under the control of a network device. For example, a PDCCH order triggers the terminal device to transmit a random access preamble to a candidate cell, and acquire a TA value of the candidate cell via a serving cell, and/or, activate a TCI State of the target cell via a MAC CE and perform TA value measurement under the configuration of an indicator for terminal-based TA measurement. However, in conditional handover and/or conditional LTM switch scenarios, the terminal device cannot determine the timing for autonomously measuring the TA value of the candidate cell, and/or, in sequential conditional handover and/or sequential conditional LTM switch scenarios, the terminal device cannot determine the timing for autonomously measuring the TA value of the candidate cell.

This embodiment introduces a manner for acquiring the TA value of the target cell in advance within conditional handover and/or conditional LTM switch.

Optionally, the terminal device performs the RACH-Less conditional handover and/or conditional LTM switch in response to satisfying a first condition.

Optionally, performing the RACH-Less conditional handover and/or conditional LTM switch includes: performing the RACH-Less conditional handover and/or conditional LTM switch based on a measured TA value.

Optionally, the terminal device reports a measurement report. Optionally, the measurement report is a Layer3 measurement report.

Optionally, a source cell acquires configuration of a candidate cell, where the configuration of the candidate cell includes a configuration parameter of the candidate cell and/or a compensation value.

Optionally, the compensation value is an uplink reception timing difference (UL RX timing difference) and/or a downlink transmission timing difference (DL TX timing difference).

Optionally, the compensation value is used to assist the terminal device in calculating the TA value of the candidate cell.

Optionally, the timing difference may be a network device side timing difference and/or a terminal device side timing difference, such as a timing difference when the network device receives the uplink, a timing difference when the network device sends the downlink, a timing difference when the terminal device sends the uplink, and a timing difference when the terminal device receives the downlink, which is not limited in this embodiment.

Optionally, the compensation value is a compensation value of a specific candidate cell, for example, each candidate cell has its own compensation value.

Optionally, the candidate cell is a LTM candidate cell.

Optionally, the LTM candidate cell configuration includes at least one of: a terminal device measured TA value identifier (ueMeasuredTA-ID), early UL synchronization configuration, configured scheduling configuration, configuration complete indication of the candidate cell, a new terminal radio temporary identifier, a timing advance timer, difference (delta) configuration of the candidate cell, and reference configuration of the candidate cell.

Optionally, the network also configures a terminal device measured TA value identifier for a serving cell.

Optionally, Layer1 measurement configuration includes LTM channel state information resource configuration and/or LTM channel state information report configuration.

Optionally, the configured scheduling configuration is also associated with beam information.

Optionally, the configured scheduling configuration includes configured scheduling type 1 (CG Type 1).

Optionally, the configuration of the LTM candidate cell is associated with a corresponding index.

Optionally, the source cell transmits conditional handover configuration, where the conditional handover configuration includes at least one of a conditional handover configuration index, a conditional execution condition, a configuration of a candidate cell.

Optionally, the terminal device locally stores the conditional handover configuration after receiving it. Optionally, the conditional handover configuration is transmitted via RRC reconfiguration signaling.

Optionally, the source cell may transmit the conditional handover configuration of at least one candidate cell, and distinguish candidate cells by the conditional handover configuration index.

Optionally, the conditional handover may also be a conditional LTM switch.

Optionally, the conditional LTM switch configuration includes at least one of a conditional LTM switch configuration index, an LTM execution condition, a configuration parameter of an LTM candidate cell.

Optionally, the source cell may also transmit common random access parameters for subsequent conditional LTM switch.

Optionally, the terminal device sends configuration confirmation information. Optionally, configuration confirmation is sent via RRC reconfiguration complete signaling.

Optionally, the terminal device evaluates candidate cells according to the execution condition. When at least one candidate cell satisfies the execution condition, the terminal device is triggered to measure the measured TA value for the corresponding candidate cell.

Optionally, the terminal device initiates a terminal device measurement of the TA value for at least one candidate cell in response to satisfying a measurement condition.

Optionally, the measurement condition includes that at least one candidate cell is configured with a terminal device measured TA value identifier.

Optionally, the terminal device determines whether a corresponding candidate cell is configured with a terminal device measured TA value identifier. If the terminal device measured TA value identifier is configured, the terminal device can be triggered to measure the TA value; and if the terminal device measured TA value identifier is not configured, it performs a RACH conditional handover or executes the TA value acquisition methods described in the preceding embodiments, which are not repeated in this embodiment.

Optionally, the terminal device receives a TCI state of a candidate cell sent by the network device and activates MAC CE, determines whether the corresponding candidate cell is configured with a terminal device measured TA value identifier. If the terminal device measured TA value identifier is configured, the terminal device can initiate a terminal device measurement of the TA value for the candidate cell; and if the terminal device measured TA value identifier is not configured, it does not initiate a terminal device measurement of the TA value for the candidate cell.

Optionally, the measurement condition further includes that the terminal device measured TA value identifier for at least one candidate cell is the same as the terminal device measured TA value identifier configured for a current serving cell.

Optionally, the terminal device determines whether the terminal device measured TA value identifier configured for the corresponding candidate cell is the same as the terminal device measured TA value identifier configured for the current serving cell. If they are the same, the terminal device can be triggered to measure the TA value; and if they are not the same, it performs a RACH conditional handover or executes the TA value acquisition methods described in the preceding embodiments, which are not elaborated in this embodiment.

Optionally, the terminal device evaluates candidate cells according to the LTM execution condition; and when at least one candidate cell satisfies the execution condition, the terminal device initiates a terminal device measurement of the TA value for the corresponding candidate cell.

Optionally, the at least one candidate cell satisfying the execution condition includes: at least one candidate cell satisfying the conditional execution condition and/or the LTM execution condition.

Optionally, the terminal device measured TA value is obtained through measurement and/or calculation using the TA value of the serving cell and/or the compensation value. Optionally, the compensation value can be obtained via a candidate cell index.

Optionally, the TA value of the serving cell is carried via a MAC CE. For details, please refer to the existing protocol TS 38.321, which will not be described in detail in this embodiment.

Optionally, satisfying the execution condition and/or the LTM execution condition includes: a signal limit satisfying a threshold, and/or, a signal strength satisfying a threshold and being maintained for a period of time.

Optionally, the terminal device initiates a RACH-Less conditional handover or LTM conditional switch condition based on the measured TA value of the candidate cell and/or measured TA value of LTM candidate cell, and sends uplink data and/or RRC reconfiguration complete signaling to the candidate cell.

Optionally, the terminal device applies the measured TA value of the candidate cell and/or starts a TAT.

Optionally, the terminal device confirms whether there is a measured TA value of the candidate cell. If there is a measured TA value of the candidate cell, the terminal device performs the RACH-less conditional handover; and/or, if there is no measured TA value of the candidate cell, it performs a RACH conditional handover.

Optionally, the terminal device applies the configuration parameter of the corresponding candidate cell and/or the configuration parameter of the corresponding LTM candidate cell. Optionally, the configuration parameter is a complete configuration.

Optionally, the complete configuration is formed by combining a reference configuration and/or a delta configuration.

Optionally, in response to the uplink data and/or RRC reconfiguration complete signaling transmitted by the terminal device, the target cell transmits a new downlink data schedule and/or a new uplink data schedule. The terminal device completes the conditional handover or the conditional LTM switch after receiving the new schedule from the candidate cell, and takes the candidate cell as the serving cell.

Optionally, the terminal device still stores the conditional handover configuration and/or the conditional LTM switch configuration after completing the conditional handover or the conditional LTM switch.

Optionally, after completing the conditional handover or the conditional LTM switch, the terminal device updates the terminal device measured TA value identifier of the serving cell. For example, the terminal device measured TA value identifier is updated to a terminal device measured TA value identifier of the handed over-to a candidate cell.

With the technical solutions of this embodiment, specifically, the terminal device autonomously measures a TA value when satisfying a first condition, and performs RACH-less conditional handover and/or conditional LTM switch based on the measured TA value. This enables the terminal device to perform early uplink synchronization and/or acquire a TA value of a target cell in advance, and perform RACH-less conditional handover and/or conditional LTM switch, thereby eliminating measurement reporting and/or handover signaling transmission, performing early uplink synchronization; and reducing signaling overhead, and/or, accelerating the handover procedure and/or reducing service interruption delay, and/or clarifying the RACH-less uplink conditional handover and/or conditional LTM switch procedure.

### Twelfth Embodiment

Referring to FIG. 16, FIG. 16 is a schematic flowchart of a processing method according to the twelfth embodiment. The method of the embodiment of the present application can be applied to a network device (e.g., a base station), including the steps:
S1: transmitting first content to enable a terminal device to perform a RACH-Less conditional handover and/or conditional LTM switch based on the first content.

Optionally, the first content includes at least one of downlink control information, a conditional handover configuration of a candidate cell, a conditional LTM switch configuration, a TA value of a serving cell, a terminal device measured TA value identifier, and a compensation value.

Optionally, a conditional handover configuration includes indication information that a TA value of a candidate cell is zero and/or indication information that the TA value of the candidate cell is the same as a TA value of the serving cell.

Optionally, a conditional LTM switch configuration includes indication information that a TA value of an LTM candidate cell is zero and/or indication information that the TA value of the LTM candidate cell is the same as the TA value of the serving cell;

Optionally, the terminal device performing the RACH-Less conditional handover and/or conditional LTM switch based on the first content, includes:
selecting or determining, by the terminal device, a candidate cell satisfying a second condition based on the first content;
transmitting, by the terminal device, a random access preamble and/or a reference signal to the candidate cell satisfying the second condition; performing, by the terminal device, the RACH-Less conditional handover and/or conditional LTM switch based on feedback information corresponding to the random access preamble and/or the reference signal provided by the serving cell; and/or, measuring and/or calculating, by the terminal device, a measured TA value of the candidate cell satisfying the second condition, and performing the RACH-Less conditional handover and/or conditional LTM switch based on the measured TA value.

Optionally, the second condition includes a conditional handover execution condition and/or a conditional LTM switch execution condition.

Optionally, the feedback information is carried in a random access response and/or an LTM switch command.

Optionally, the feedback information includes the TA value of the candidate cell and/or the TA value of the LTM candidate cell.

Optionally, the downlink control information includes at least one of index information, random access configuration, and reference signal configuration.

Optionally, the terminal device measured TA value identifier is used to trigger the terminal device to measure and/or calculate a measured TA value of a corresponding candidate cell.

Optionally, the measured TA value is measured and/or calculated by the terminal device using the TA value of the serving cell and/or the compensation value.

Optionally, the conditional handover configuration includes at least one of a conditional handover configuration index, an execution condition, a configuration parameter of a candidate cell, and a TA value of the candidate cell.

Optionally, the conditional LTM switch configuration includes at least one of a conditional LTM switch configuration index, an LTM execution condition, a configuration parameter of an LTM candidate cell, and a TA value of the LTM candidate cell.

Optionally, the random access response carries at least one of a TA value, uplink scheduling, configured scheduling information, and a radio network temporary identifier of at least one candidate cell and/or LTM candidate cell.

Optionally, the LTM switch command carries at least one of the TA value, the uplink scheduling, the configured scheduling information, and the radio network temporary identifier of at least one LTM candidate cell.

Optionally, the index information includes the conditional handover configuration index and/or a conditional LTM switch configuration index.

Optionally, the terminal device initiates a terminal device measurement of the TA value for at least one candidate cell in response to satisfying a measurement condition.

Optionally, the network device may acquire at least one of, the TA value, the compensation value, an uplink transmission delay, the uplink scheduling, the configured scheduling information, and the radio network temporary identifier of the candidate cell.

Optionally, the network device calculates the TA value of the candidate cell based on the uplink transmission delay.

Optionally, the network device receives feedback information corresponding to a random access preamble and/or a reference signal sent by the candidate cell; and/or, transmits the feedback information corresponding to the random access preamble and/or the reference signal to the terminal device.

With the technical solutions of this embodiment, specifically, through sending the first content, the terminal is enabled to perform the RACH-less conditional handover and/or conditional LTM switch based on the first content, providing a conditional handover and/or conditional LTM switch method supporting RACH-less, and/or, clarifying the execution condition for conditional LTM switch; and/or, introducing a method for acquiring the TA value of the target cell in advance within the conditional handover and/or the conditional LTM switch; and reducing signaling overhead caused handover signaling transmission by the network device, and/or accelerating the handover procedure and/or reducing service interruption delay.

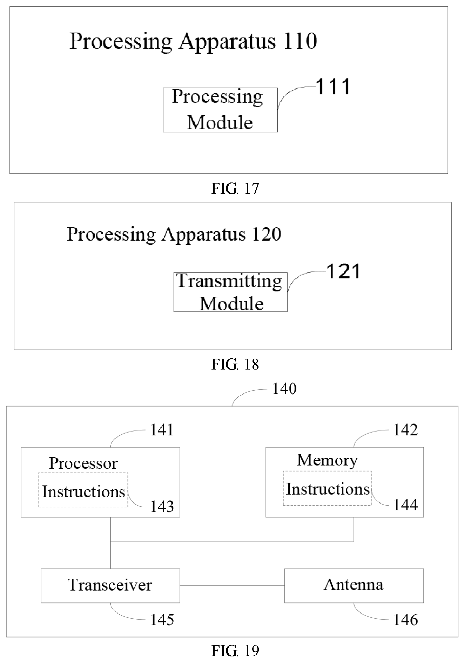

Referring to FIG. 17, FIG. 17 is a schematic structural diagram 1 of a processing apparatus provided by an embodiment of the present application. The apparatus can be mounted in or is the terminal device in the foregoing method embodiments. The processing apparatus shown in FIG. 17 can be used to perform part or all of the functions in the method embodiments described in the foregoing embodiments. As shown in FIG. 17, the processing apparatus 110 includes:
a processing module 111, configured to perform a RACH-Less conditional handover and/or conditional LTM switch in response to satisfying a first condition.

Optionally, the performing the RACH-Less conditional handover and/or conditional LTM switch includes:
performing the RACH-Less conditional handover and/or conditional LTM switch based on feedback information corresponding to a random access preamble and/or a reference signal provided by a serving cell; and/or,
performing the RACH-Less conditional handover and/or conditional LTM switch based on a measured TA value.

Optionally, the satisfying the first condition includes at least one of the following:
determining that at least one candidate cell satisfies a conditional handover execution condition;
determining that at least one candidate cell satisfies a conditional LTM switch execution condition;
receiving downlink control information;
receiving radio resource control reconfiguration signaling;
a conditional handover configuration carries indication information that a TA value of a candidate cell is zero and/or indication information that the TA value of the candidate cell is the same as a TA value of the serving cell;
a conditional LTM switch configuration carries indication information that a TA value of an LTM candidate cell is zero and/or indication information that the TA value of the LTM candidate cell is the same as the TA value of the serving cell.

Optionally, the apparatus further includes at least one of the following:
the feedback information is carried in a random access response and/or an LTM switch command;
the feedback information includes the TA value of the candidate cell and/or the TA value of the LTM candidate cell;
the downlink control information includes at least one of index information, a random access configuration, and a reference signal configuration;
the radio resource control reconfiguration signaling includes at least one of the TA value of the serving cell, the conditional handover configuration for at least one candidate cell, the conditional LTM switch configuration, a terminal device measured TA value identifier, and a compensation value.

Optionally, the apparatus further includes at least one of the following:
the conditional handover configuration includes at least one of a conditional handover configuration index, an execution condition, a configuration parameter of a candidate cell, and a TA value of the candidate cell;
the conditional LTM switch configuration includes at least one of a conditional LTM switch configuration index, an LTM execution condition, a configuration parameter of an LTM candidate cell, and a TA value of the LTM candidate cell;
the random access response carries at least one of a TA value, uplink scheduling, configured scheduling information, and a radio network temporary identifier of at least one candidate cell and/or LTM candidate cell;
the LTM switch command carries at least one of the TA value, the uplink scheduling, the configured scheduling information, and the radio network temporary identifier of at least one LTM candidate cell;
the index information includes the conditional handover configuration index and/or the conditional LTM switch configuration index;
the terminal device initiates a terminal device measurement of the TA value for at least one candidate cell in response to satisfying a measurement condition.

Optionally, the apparatus further includes at least one of the following:
system information of a corresponding candidate cell is acquired according to the configuration parameter of the candidate cell and/or the configuration parameter of the LTM candidate cell;
performing RACH-Less based on the TA value of the candidate cell and/or the TA value of the LTM candidate cell;
performing conditional handover evaluation based on the conditional handover configuration;
performing conditional LTM switch evaluation based on the conditional LTM switch configuration;
applying the configuration parameter of the candidate cell and/or the configuration parameter of the LTM candidate cell;
storing the conditional handover configuration and/or the conditional LTM switch configuration;
the measurement condition includes that at least one candidate cell is configured with the terminal device measured TA value identifier, and/or, the terminal device measured TA value identifier configured for at least one candidate cell is the same as a terminal device measured TA value identifier configured for a current serving cell;
the measured TA value is measured and/or calculated by the terminal device using the TA value of the serving cell and/or the compensation value.

The processing apparatus provided in the embodiment of the present application can perform the technical solutions of the above method embodiments, and their implementation principles and beneficial effects are similar and will not be repeated here.

Referring to FIG. 18, FIG. 18 is a schematic structural diagram 2 of a processing apparatus provided by an embodiment of the present application. The apparatus can be mounted in or is ae network device in the foregoing method embodiments. As shown in FIG. 18, the processing apparatus 120 includes:
a transmitting module 121, configured to transmit first content to enable a terminal device to perform a RACH-Less conditional handover and/or conditional LTM switch based on the first content.

Optionally, the first content includes at least one of the following:
downlink control information;
a conditional handover configuration for at least one candidate cell;
a conditional LTM switch configuration for at least one candidate cell;
a TA value of a serving cell;
a terminal device measured TA value identifier;
a compensation value.

Optionally, the apparatus further includes at least one of the following:
the conditional handover configuration includes indication information that a TA value of a candidate cell is zero;
the conditional handover configuration includes indication information that the TA value of the candidate cell is the same as the TA value of the serving cell;
the conditional LTM switch configuration includes indication information that a TA value of an LTM candidate cell is zero;
the conditional LTM switch configuration includes indication information that the TA value of the LTM candidate cell is the same as the TA value of the serving cell.

Optionally, performing, by the terminal device, the RACH-Less conditional handover and/or conditional LTM switch based on the first content includes:
selecting or determining, by the terminal device, a candidate cell satisfying a second condition based on the first content;
transmitting, by the terminal device, a random access preamble and/or a reference signal to the candidate cell satisfying the second condition; performing, by the terminal device, the RACH-Less conditional handover and/or conditional LTM switch based on feedback information corresponding to the random access preamble and/or the reference signal provided by the serving cell; and/or, measuring and/or calculating, by the terminal device, a measured TA value of the candidate cell satisfying the second condition, and performing the RACH-Less conditional handover and/or conditional LTM switch based on the measured TA value.

Optionally, the apparatus further includes at least one of the following:
the second condition includes a conditional handover execution condition and/or a conditional LTM switch execution condition;
the feedback information is carried in a random access response and/or an LTM switch command;
the feedback information includes the TA value of the candidate cell and/or the TA value of the LTM candidate cell;
the downlink control information includes at least one of index information, random access configuration, and reference signal configuration;
the terminal device measured TA value identifier is used to trigger the terminal device to measure and/or calculate a measured TA value of a corresponding candidate cell;
the measured TA value is measured and/or calculated by the terminal device using the TA value of the serving cell and/or the compensation value.

Optionally, the apparatus further includes at least one of the following:
the conditional handover configuration includes at least one of a conditional handover configuration index, an execution condition, a configuration parameter of a candidate cell, and a TA value of the candidate cell;
the conditional LTM switch configuration includes at least one of a conditional LTM switch configuration index, an LTM execution condition, a configuration parameter of an LTM candidate cell, and a TA value of the LTM candidate cell;
the random access response carries at least one of a TA value, uplink scheduling, configured scheduling information, and a radio network temporary identifier of at least one candidate cell and/or LTM candidate cell;
the LTM switch command carries at least one of the TA value, the uplink scheduling, the configured scheduling information, and the radio network temporary identifier of at least one LTM candidate cell;
the index information includes a conditional handover configuration index and/or a conditional LTM switch configuration index;
the terminal device initiates a terminal device measurement of the TA value for at least one candidate cell in response to satisfying a measurement condition.

Optionally, the apparatus further includes at least one of the following:
acquiring, from the candidate cell, at least one of the TA value, the compensation value, an uplink transmission delay, the uplink scheduling, the configured scheduling information, and the radio network temporary identifier of the candidate cell;
calculating the TA value of the candidate cell based on the uplink transmission delay;
receiving feedback information corresponding to a random access preamble and/or a reference signal sent by the candidate cell;
transmitting the feedback information corresponding to the random access preamble and/or the reference signal to the terminal device.

The processing apparatus provided in the embodiment of the present application can perform the technical solutions of the above method embodiments, and their implementation principles and beneficial effects are similar and will not be repeated here.

Referring to FIG. 19, FIG. 19 is a schematic structural diagram of a communication device provided by an embodiment of the present application. As shown in FIG. 19, the communication device 140 of this embodiment can be the terminal device (or a component that can be used in the terminal device) or the network device (or a component that can be used in the network device) mentioned in the above method embodiments. The communication device 140 can be used to implement the method corresponding to the terminal device or the network device described in the above method embodiment, for details, please refer to the description in the above method embodiment.

The communication device 140 can include one or more processors 141, and the processor 141 may also be called a processing unit, which can implement certain controlling or processing functions. The processor 141 may be a general-purpose processor or a special-purpose processor, for example, a baseband processor or a central processing unit. The baseband processor can be used to process communication protocols and communication data, and the central processing unit can be used to control communication devices, execute software programs, and process data of software programs.

Optionally, the processor 141 may also store instructions 143 or data (such as intermediate data). Optionally, the instruction 143 can be executed by the processor 141, so as to cause the communication device 140 to execute the method corresponding to the terminal device or the method corresponding to the network device described in the above method embodiment.

Optionally, the communication device 140 may include a circuit, which can implement transmitting or receiving or communication functions in the above mentioned method embodiments.

Optionally, the communication device 140 may include one or more memories 142, which can store instructions 144, and the instructions can run in the processor 141 to cause the communication device 140 to perform the method described in the above method embodiments.

Optionally, the memory 142 can store data. The processor 141 and the memory 142 may be set separately or integrated together.

Optionally, the communication device 140 may further include a transceiver 145 and/or an antenna 146. The processor 141 may be called a processing unit, which controls the communication device 140 (a terminal device or a core network device or a radio access network device). The transceiver 145 may be called a transceiving unit, a transceiving machine, a transceiving circuit, or a transceiver, etc., and is configured to implement the transceiving function of the communication device 140.

Optionally, if the communication device 140 is configured to implement operations corresponding to the terminal device in the above embodiments, for example, the transceiver 145 can receive the first content; and the processor 141 performs the RACH-less conditional handover and/or conditional LTM switch based on the first content.

Optionally, for the specific implementation process of the processor 141 and the transceiver 145, reference can be made to the relevant descriptions of the above embodiments, which will not be repeated here.

Optionally, if the communication device 140 is configured to implement operations corresponding to the network device in the above embodiments, for example, the transceiver 145 can transmit the first content, so as to enable the terminal device to perform the RACH-less conditional handover and/or conditional LTM switch based on the first content.

Optionally, for the specific implementation process of the processor 141 and the transceiver 145, reference can be made to the relevant descriptions of the above embodiments, which will not be repeated here.

The processor 141 and the transceiver 145 described in the present application can be implemented in an IC (Integrated Circuit, integrated circuit), an analog integrated circuit, an RFIC (Radio Frequency Integrated Circuit, radio frequency integrated circuit), a mixed-signal integrated circuit, an ASIC (Application Specific Integrated Circuit, application specific integrated circuit), a PCB (Printed Circuit Board, printed circuit board), an electronic device, etc. The processor 141 and the transceiver 145 can also be manufactured by various integrated circuit technologies, such as CMOS (Complementary Metal Oxide Semiconductor, complementary metal oxide semiconductor), NMOS (N Metal-Oxide-Semiconductor, N metal-oxide-semiconductor), PMOS (Positive Channel Metal Oxide Semiconductor, positive channel metal oxide semiconductor), BJT (Bipolar Junction Transistor, bipolar junction transistor), bipolar CMOS (BiCMOS), silicon germanium (SiGe), gallium arsenide (GaAs), etc.

In the present application, the communication device can be a terminal device (such as a mobile phone) or a network device (such as a base station), which needs to be specifically determined according to the context. In addition, the terminal device can be implemented in various forms. For example, the terminal device described in the present application can include a mobile terminal such as a mobile phone, a tablet computer, a notebook computer, a palm computer, a personal digital assistant (Personal Digital Assistant, PDA), a portable media player (Portable Media Player, PMP), a navigation device, a wearable device, a smart bracelet, a pedometer, and a fixed terminal device such as a digital TV or a desktop computer.

Although in the above description of embodiments, the communication device is described by taking a terminal device or a network device as an example, the scope of the communication device described in the present application is not limited to the above-mentioned terminal device or network device, and the structure of the communication device may not be limited by FIG. 19. The communication device can be a stand-alone device or can be part of a large device.

An embodiment of the present application also provides a communication system, including the terminal device according to any one of the above embodiments; and the network device according to any one of the above embodiments.

An embodiment of the present application also provides a communication device, including: a memory and a processor; where the memory stores a computer program, and when the computer program is executed by the processor, the steps of the processing method according to any one of the above embodiments are implemented.

The communication device mentioned in the present application can either be a terminal device (such as a mobile phone) or a network device (such as a base station). The specific meaning needs to be clarified based on the context.

An embodiment of the present application also provides a storage medium storing a processing program, and when the processing program is executed by the processor, the steps of the processing method according to any one of the above embodiments are implemented.

The embodiments of the communication device and the storage medium provided by the embodiments of the present application can include all the technical features of any one of the above processing method embodiments, and the extended and described contents of the description are basically the same as those of the embodiments of the above methods, which will not be repeated here.

An embodiment of the present application also provides a computer program product, including a computer program code, and when the computer program code is running in a computer, the computer is caused to perform the method in the above various possible implementations.

An embodiment of the present application also provides a chip, including a memory and a processor, where the memory is used to store a computer program, the processor is used to call and run the computer program from the memory, to cause a device in which the chip is installed to perform the methods in the above various possible implementations.

It can be understood that the above scenario is only an example, and does not constitute a limitation to the application scenario of the technical solution provided by the embodiments of the present application, and the technical solution of the present application can also be applied to other scenarios. For example, those of ordinary skill in the art know that with the evolution of system architecture and the emergence of new business scenarios, the technical solutions provided by the embodiments of the present application is also applicable to similar technical problems. The above-mentioned serial numbers of the embodiments of the present application are used for description only, and do not represent the advantages and disadvantages of the embodiments. The steps in the methods of the embodiments of the present application can be sequentially adjusted, combined and deleted according to actual needs. The units in the device of the embodiments of the present application can be combined, divided and deleted according to actual needs. In the present application, the same or similar terms, concepts, technical solutions and/or application scenarios are generally described in detail only when they appear for the first time, and when they appear repeatedly later, they are generally not repeated for brevity. During understanding the technical solutions of the present application, please refer to the previous detailed descriptions for the same or similar terms, concepts, technical solutions and/or application scenarios that are not described in detail later. In the present application, the description of each embodiment has its own emphasis. For the parts not detailed or recorded in one embodiment, please refer to the related descriptions of other embodiments.

The technical features of the technical solution of the present application can be arbitrarily combined. To make the description concise, not all of the possible combinations of the technical features in the above embodiments are described. However, as long as there is no contradiction in the combination of these technical features, it should be considered as the scope of the present application.

Through the description of the above embodiments, those skilled in the art can clearly understand that the methods of the above embodiments can be implemented by means of software plus a necessary general hardware platform, and of course, it can also be implemented by hardware, however, in many cases, the former is the better implementation. Based on this understanding, the essence of the technical solution of the present application or the part that contributes to the prior art may be embodied in the form of a software product, which is stored in the above storage medium (such as a ROM/RAM, a magnetic disk and an optical disk) and includes several instructions to cause a terminal device (which may be a mobile phone, a computer, a server, a controlled terminal device, a network device, etc.) to perform the method of each embodiment of the present application.

In the above-mentioned embodiments, it can be implemented in whole or in part by software, hardware, firmware or any combination thereof. When implemented in software, it can be fully or partially implemented in the form of a computer program product. A computer program product includes one or more computer instructions. When the computer program instructions are loaded and executed in a computer, all or part of the processes or functions according to the embodiments of the present application are generated. The computer can be a general-purpose computer, a special-purpose computer, a computer network, or other programmable devices. The computer instructions can be stored in a storage medium or transmitted from one storage medium to another. For example, the computer instructions can be transmitted from one website, computer, server or data center to another website, computer, server or data center in a wired way (such as a coaxial cable, an optical fiber, a digital subscriber line) or a wireless way (such as infrared, wireless, microwave, etc.). The storage medium can be any available medium that computers can access, or data storage devices such as servers and data centers that include one or more available media. The available medium can be a magnetic medium (e.g., a floppy disk, a storage disk, a magnetic tape), an optical medium (e.g., DVD), or a semiconductor medium (e.g., a solid state disk, Solid State Disk (SSD)).

The above only shows the preferred embodiments of the present application, which do not limit the patent scope of the present application. Any equivalent structure or equivalent process changes made by using the content of the specification and drawings of the present application, or directly or indirectly applied in other related technical fields, are equally included in the patent protection scope of the present application.

## Claims

1. A processing method, comprising following steps:
S2: performing a RACH-Less conditional handover and/or conditional LTM switch in response to satisfying a first condition.

2. The method according to claim 1, wherein the performing the RACH-Less conditional handover and/or conditional LTM switch comprises:
performing the RACH-Less conditional handover and/or conditional LTM switch based on feedback information corresponding to a random access preamble and/or a reference signal provided by a serving cell; and/or,
performing the RACH-Less conditional handover and/or conditional LTM switch based on a measured TA value.

3. The method according to claim 1, wherein the satisfying the first condition comprises at least one of the following:
determining that at least one candidate cell satisfies a conditional handover execution condition;
determining that at least one candidate cell satisfies a conditional LTM switch execution condition;
receiving downlink control information;
receiving radio resource control reconfiguration signaling;
a conditional handover configuration carries indication information that a TA value of a candidate cell is zero and/or indication information that the TA value of the candidate cell is the same as a TA value of a serving cell;
a conditional LTM switch configuration carries indication information that a TA value of an LTM candidate cell is zero and/or indication information that the TA value of the LTM candidate cell is the same as the TA value of the serving cell.

4. The method according to claim 3, further comprising at least one of the following:
feedback information is carried in a random access response and/or an LTM switch command;
feedback information comprises the TA value of the candidate cell and/or the TA value of the LTM candidate cell;
the downlink control information comprises at least one of index information, a random access configuration, and a reference signal configuration;
the radio resource control reconfiguration signaling comprises at least one of the TA value of the serving cell, the conditional handover configuration for at least one candidate cell, the conditional LTM switch configuration, a terminal device measured TA value identifier, and a compensation value.

5. The method according to claim 4, further comprising at least one of the following:
the conditional handover configuration comprises at least one of a conditional handover configuration index, an execution condition, a configuration parameter of a candidate cell, and a TA value of the candidate cell;
the conditional LTM switch configuration comprises at least one of a conditional LTM switch configuration index, an LTM execution condition, a configuration parameter of an LTM candidate cell, and a TA value of the LTM candidate cell;
the random access response carries at least one of a TA value, uplink scheduling, configured scheduling information, and a radio network temporary identifier of at least one candidate cell and/or LTM candidate cell;
the LTM switch command carries at least one the TA value, the uplink scheduling, the configured scheduling information, and the radio network temporary identifier of at least one LTM candidate cell;
the index information comprises the conditional handover configuration index and/or the conditional LTM switch configuration index;
initiating a terminal device measurement of the TA value for at least one candidate cell in response to satisfying a measurement condition.

6. The method according to claim 5, further comprising at least one of the following:
system information of a corresponding candidate cell is acquired according to the configuration parameter of the candidate cell and/or the configuration parameter of the LTM candidate cell;
performing a RACH-Less based on the TA value of the candidate cell and/or the TA value of the LTM candidate cell;
performing conditional handover evaluation based on the conditional handover configuration;
performing conditional LTM switch evaluation based on the conditional LTM switch configuration;
applying the configuration parameter of the candidate cell and/or the configuration parameter of the LTM candidate cell;
storing the conditional handover configuration and/or the conditional LTM switch configuration;
the measurement condition comprises that at least one candidate cell is configured with the terminal device measured TA value identifier, and/or, the terminal device measured TA value identifier configured for at least one candidate cell is the same as a terminal device measured TA value identifier configured for a current serving cell;
the measured TA value is measured and/or calculated by the terminal device using the TA value of the serving cell and/or the compensation value.

7. A processing method, comprising following steps:
S1: transmitting first content to enable a terminal device to perform a RACH-Less conditional handover and/or conditional LTM switch based on the first content.

8. The method according to claim 7, wherein the first content comprises at least one of the following:
downlink control information;
a conditional handover configuration for at least one candidate cell;
a conditional LTM switch configuration for at least one candidate cell;
a TA value of a serving cell;
a terminal device measured TA value identifier;
a compensation value.

9. The method according to claim 8, further comprising at least one of the following:
the conditional handover configuration comprises indication information that a TA value of a candidate cell is zero;
the conditional handover configuration comprises indication information that the TA value of the candidate cell is the same as the TA value of the serving cell;
the conditional LTM switch configuration comprises indication information that a TA value of an LTM candidate cell is zero;
the conditional LTM switch configuration comprises indication information that the TA value of the LTM candidate cell is the same as the TA value of the serving cell.

10. The method according to claim 8, wherein performing, by the terminal device, the RACH-Less conditional handover and/or conditional LTM switch based on the first content comprises:
selecting or determining, by the terminal device, a candidate cell satisfying a second condition based on the first content;
transmitting, by the terminal device, a random access preamble and/or a reference signal to the candidate cell satisfying the second condition; performing, by the terminal device, the RACH-Less conditional handover and/or conditional LTM switch based on feedback information corresponding to the random access preamble and/or the reference signal provided by the serving cell; and/or, measuring and/or calculating, by the terminal device, a measured TA value of the candidate cell satisfying the second condition, and performing the RACH-Less conditional handover and/or conditional LTM switch based on the measured TA value.

11. The method according to claim 10, further comprising at least one of the following:
the second condition comprises a conditional handover execution condition and/or a conditional LTM switch execution condition;
the feedback information is carried in a random access response and/or an LTM switch command;
the feedback information comprises the TA value of the candidate cell and/or the TA value of the LTM candidate cell;
the downlink control information comprises at least one of index information, random access configuration, and reference signal configuration;
the terminal device measured TA value identifier is used to trigger the terminal device to measure and/or calculate a measured TA value of a corresponding candidate cell;
the measured TA value is measured and/or calculated by the terminal device using the TA value of the serving cell and/or the compensation value.

12. The method according to claim 11, further comprising at least one of the following:
the conditional handover configuration comprises at least one of a conditional handover configuration index, an execution condition, a configuration parameter of a candidate cell, and a TA value of the candidate cell;
the conditional LTM switch configuration comprises at least one of a conditional LTM switch configuration index, an LTM execution condition, a configuration parameter of an LTM candidate cell, and a TA value of the LTM candidate cell;
the random access response carries at least one of a TA value, uplink scheduling, configured scheduling information, and a radio network temporary identifier of at least one candidate cell and/or LTM candidate cell;
the LTM switch command carries at least one the TA value, the uplink scheduling, the configured scheduling information, and the radio network temporary identifier of at least one LTM candidate cell;
the index information comprises the conditional handover configuration index and/or the conditional LTM switch configuration index;
the terminal device initiates a terminal device measurement of the TA value for at least one candidate cell in response to satisfying a measurement condition.

13. The method according to claim 12, further comprising at least one of the following:
acquiring, from the candidate cell, at least one of the TA value, the compensation value, an uplink transmission delay, the uplink scheduling, the configured scheduling information, and the radio network temporary identifier of the candidate cell;
calculating the TA value of the candidate cell based on the uplink transmission delay;
receiving feedback information corresponding to a random access preamble and/or a reference signal sent by the candidate cell;
transmitting the feedback information corresponding to the random access preamble and/or the reference signal to the terminal device.

14. A communication device, comprising: a memory, a processor, and a processing program stored in the memory and runs in the processor, wherein the processing program, when executed by the processor, implements steps of the processing method according to claim 1 or 7.

15. A storage medium, wherein the storage medium stores a computer program which, when executed by a processor, implements steps of the processing method according to claim 1 or 7.
